# EUROPEAN PATENT SPECIFICATION

(11) **EP 3 595 278 B1**
(45) Date of publication and mention of the grant of the patent: **09.08.2023**
(21) Application number: 18764411.7
(22) Date of filing: 07.03.2018
(51) Int. Cl.: H04M 3/56, H04M 1/60, H04M 9/08

(54) **COMMUNICATION SYSTEM AND MOBILE COMMUNICATION TERMINAL**
KOMMUNIKATIONSSYSTEM UND MOBILKOMMUNIKATIONSENDGERÄT
SYSTÈME DE COMMUNICATION ET TERMINAL DE COMMUNICATION MOBILE

(30) Priority: 10.03.2017 WO PCT/JP2017/009756; 22.11.2017 JP 2017224861
(43) Date of publication of application: 15.01.2020
(60) Divisional application: 23183175.1
(73) Proprietor: Bonx Inc., Tokyo 154-0012 (JP)
(72) Inventor: AIHARA Shunsuke, Tokyo 154-0012 (JP); MASUDA Afra, Tokyo 154-0012 (JP); SAITO Hotaka, Tokyo 154-0012 (JP); MORIMOTO Toshihiro, Tokyo 154-0012 (JP); NARASAKI Yuta, Tokyo 154-0012 (JP); MIYASAKA Takahiro, Tokyo 154-0012 (JP)
(74) Representative: Henkel & Partner mbB
(86) International application number: PCT/JP2018/008697
(87) International publication number: WO 2018/164165

(56) References cited:
- JP-A- 2007 300 243
- JP-A- 2007 318 740
- JP-A- 2010 050 695
- JP-A- 2011 097 268
- JP-A- 2016 189 121
- US-A1- 2005 108 004
- US-A1- 2017 013 105

## Description

### [Technical Field]

The present invention relates to a communication system and a mobile communication terminal.

### [Background Art]

In a communication system for performing a multiple-to-multiple call in a group using a mobile communication network, mobile communication terminals possessed by callers are registered as a group before the call starts, and voice data obtained by encoding the speech of speaking persons is exchanged between mobile communication terminals registered in the group whereby a multiple-to-multiple call in the group is realized.

When a call is performed between groups using a mobile communication network, voice data obtained by encoding the speech of speaking persons is transmitted to mobile communication terminals possessed by callers participating in the groups via a VoIP server. By transmitting voice data via the VoIP server in this manner, it is possible to alleviate a communication load associated with the multiple-to-multiple call within the group to some extent.

When a call is performed using a mobile communication network, the call may be performed using a headset connected to a mobile communication terminal using a short range communication scheme such as Bluetooth (registered trademark) as well as performing the call using a microphone and a speaker provided in a mobile communication terminal (for example, see Patent Literature 1). The use of a headset enables a mobile communication terminal to collect the sound of a caller in a state in which the caller is not holding the mobile communication terminal with a hand and also enables the mobile communication terminal to deliver a conversation delivered from a mobile communication terminal of a counterpart of the call to the caller in a state in which the caller is not holding the mobile communication terminal with a hand.

When the multiple-to-multiple call within the group is performed using the conventional technology described above, all participants of the call can converse with each other while exchanging speech with high quality and a short delay when all participants are in a satisfactory communication environment.

Patent Literature 2 discloses a voice activity detector that detects talkspurts in a given signal at a high accuracy, so as to improve the quality of voice communication. A frequency spectrum calculator calculates frequency spectrum of a given input signal. A flatness evaluator evaluates the flatness of this power spectrum by, for example, calculating the average of power spectral components and then adding up the differences between those components and the average. The resultant sum of differences, in this case, is used as a flatness factor of the spectrum. A voice/noise discriminator determines whether the input signal contains a talkspurt or not, by comparing the flatness factor of the frequency spectrum with a predetermined threshold.

Patent Literature 3 discloses a voice signal processing apparatus including: an input unit which receives a voice signal of a user; a detecting unit which detects an auxiliary signal, and a signal processing unit which transmits the voice signal to an external terminal in a first operation mode and transmits the voice signal and the auxiliary signal to the external terminal using the same or different protocols in a second operation mode.

Patent Literature 4 discloses a playback device including: a playback unit that plays back contents sound; an output unit that outputs the contents sound which is played back using the playback unit to the headphone; a talk detection unit that detects conversation by a headphone fitter; and a sound image normal position control unit that moves the normal position of sound image of the contents sound which is played back using the playback unit to an arbitrary position when the talk detection unit detects the start of the conversation.

### [Citation List]

### [Patent Literature]

[Patent Literature 1] Japanese Unexamined Patent Application Publication No. 2011-182407
[Patent Literature 2] US 2005/108004 A1
[Patent Literature 3] US 2017/013105 A1
[Patent Literature 4] JP 2011 097268 A

### [Summary of Invention]

### [Technical Problem]

However, when a participant is in an environment distant from a base station where a radio wave state is poor such as a snow-covered mountain, the sea, a construction site, a quarry, or an airport or in an environment where a large number of mobile communication terminal users are crowded together and it is difficult to collect radio waves, if the speech is encoded to voice data as it is and the voice data is transmitted, the amount of the voice data to be transmitted per unit time is larger than a communication bandwidth. Therefore, delivery of the voice data is delayed and it is difficult to continue a comfortable call. In this case, when the compression ratio in encoding speech is increased so that the voice data to be transmitted per unit time has a size appropriate for a communication bandwidth, the delivery delay of voice data can be improved to some extent. However, the quality of the speech obtained by decoding the delivered voice data may deteriorate and it may be difficult to perform satisfactory conversation.

When a call is performed on a snow-covered mountain, the sea, a crowd, a construction site, a quarry, or an airport, ambient sound such as a wind noise, a crowd sound, a construction noise, a mining noise, or an engine sound may be a problem. When a call is performed in such an environment, the microphone used for the call may collect ambient sound generated in the surroundings other than the speech of speaking persons, and speech in which the ambient sound is mixed with the speech of the speaking person may be encoded to voice data and be transmitted to mobile communication terminals possessed by participants of the call. This ambient sound may decrease the S/N ratio and unnecessary voice data made up of ambient sound only in which the speech of the speaking person is not present may be transmitted, which becomes a cause of data delay.

When a person is making a call on a snow-covered mountain, the sea, a crowd, a construction site, a quarry, or an airport, the person may often be in the middle of performing activities other than the call such as sports or manipulating or operating an apparatus. In such a state, although it may generally only be necessary to press a button in the speech segment to transmit the voice data using a transceiver explicitly, this button operation may disturb an activity that the person has to perform.

Furthermore, when speech obtained by decoding voice data is reproduced using a receiving-side mobile communication terminal having received the voice data, it may be difficult to hear the reproduced speech due to ambient sound on the receiving side. Although a noise canceling technology may be applied to the ambient sound so that a person can hear speech in spite of the ambient sound, if noise canceling is applied uniformly on a snow-covered mountain, the sea, a crowd, a construction site, a quarry, or an airport to cut out the ambient sound, a caller may fail to recognize a danger occurring in the surroundings promptly.

In addition to the above-mentioned problem, when a group call is performed using a headset and a mobile communication terminal, if a speech encoding scheme with a large processing load is used, the battery of the headset and the mobile communication terminal may be consumed quickly and it may be difficult to continue the group call for a long period. Particularly, since many headsets are compact enough to be worn on an ear, and the battery capacity of a headset is smaller than that of a mobile communication terminal, functions need to be shared appropriately by the headset and the mobile communication terminal and speech needs to be encoded efficiently by combining algorithms with a low calculation load.

Therefore, an object of the present invention is to provide a communication system capable of performing a comfortable group call in a weak radio wave environment or an environment where ambient sound is loud.

### [Solution to Problem]

The communication system of the present invention includes the following three means and solves the above-described problems occurring in a multiple-to-multiple communication in a group by associating these means with each other.
[Means 1]
   Means for extracting a speech part of a person with high accuracy from speech detected by a headset and generating voice data
[Means 2]
   Dynamic communication quality control means corresponding to a weak radio wave environment
[Means 3]
   Noise-robust reproduction control means which takes an environment into consideration

The present invention provides a communication system according to independent claim 1, and a mobile communication terminal according to independent claim 2.

### [Advantageous Effects of Invention]

According to the present invention, the amount of data transmitted via a mobile network in a multiple-to-multiple group call decreases, whereby it is possible to reduce the power consumption in the mobile communication terminal and the headset and to suppress speech delay even when a communication bandwidth is not sufficient.

Furthermore, by detecting only the speech segment automatically, the noise is reduced without disturbing other activities nor using hands and the content of a speech of a call counterpart is delivered clearly, whereby the user experience (UX) of a call can be improved significantly.

### [Brief Description of Drawings]

FIG. 1 is a schematic block diagram of a communication system according to Embodiment 1 of the present invention.
FIG. 2 is a schematic functional block diagram of an API server according to Embodiment 1 of the present invention.
FIG. 3 is a schematic functional block diagram of a mobile communication terminal according to Embodiment 1 of the present invention.
FIG. 4 is a schematic functional block diagram of a headset according to Embodiment 1 of the present invention.
FIG. 5 is a sequence chart illustrating the flow of processes executed on the headset and the mobile communication terminal, related to a speech detection function according to Embodiment 1 of the present invention.
FIG. 6 is a diagram illustrating an image of conversion until voice data to be transmitted is generated from a speech detected according to the sequence chart of FIG. 5 according to Embodiment 1 of the present invention.
FIG. 7 is a sequence chart illustrating the flow of processes executed on the headset and the mobile communication terminal, related to a speech reproduction control function according to Embodiment 1 of the present invention.
FIG. 8 is a sequence chart illustrating the flow of processes executed on the API server, the VoIP server, and the mobile communication terminal, related to a communication control function when a data transmission delay occurs according to Embodiment 1 of the present invention.
FIG. 9 is a sequence chart illustrating the flow of processes executed on the API server, the VoIP server, and the mobile communication terminal, related to a communication control function when a data transmission state is recovered according to Embodiment 1 of the present invention.
FIG. 10 is a sequence chart illustrating the flow of processes executed on the API server, the VoIP server, and the mobile communication terminal, related to a communication control function when a communication loss occurs according to Embodiment 1 of the present invention.
FIG. 11 is a sequence chart illustrating the flow of processes executed on the API server, the VoIP server, and the mobile communication terminal, related to a communication control function when a communication loss occurs according to Embodiment 1 of the present invention.
FIG. 12 is a schematic block diagram of a communication system according to Embodiment 2 of the present invention.
FIG. 13 is a schematic block diagram of a communication system according to Embodiment 3 of the present invention.
FIG. 14 is a schematic block diagram of a communication system according to Embodiment 4 of the present invention.
FIG. 15 is a block diagram illustrating a configuration of the mobile communication terminal according to Embodiment 4 of the present invention.
FIG. 16 is a block diagram illustrating a configuration of a cloud according to Embodiment 4 of the present invention.
FIG. 17 is a diagram illustrating a connection state display screen that displays a connection state of a headset (an earphone) and a mobile communication terminal according to Embodiment 4 of the present invention.
FIG. 18 is a diagram illustrating a login screen displayed when logging into a communication system according to Embodiment 4 of the present invention.
FIG. 19 is a diagram illustrating a tenant change screen displayed when a tenant is changed according to Embodiment 4 of the present invention.
FIG. 20 is a diagram illustrating a room participation screen displayed when a user participates in a room according to Embodiment 4 of the present invention.
FIG. 21 is a diagram illustrating a room creation screen displayed when a user creates a room according to Embodiment 4 of the present invention.
FIG. 22 is a diagram illustrating a call screen displayed when a user participates in a room according to Embodiment 4 of the present invention.
FIG. 23 is a diagram illustrating a room member screen displayed when a user checks room members according to Embodiment 4 of the present invention.
FIG. 24 is a diagram illustrating a popup window displayed on a room member screen according to Embodiment 4 of the present invention.
FIG. 25 is a diagram illustrating a user settings screen according to Embodiment 4 of the present invention.
FIG. 26 is a diagram illustrating a management screen related to rooms and recording according to Embodiment 4 of the present invention.
FIG. 27 is a diagram illustrating a management screen related to user attributes according to Embodiment 4 of the present invention.
FIG. 28 is a diagram illustrating a user addition screen according to Embodiment 4 of the present invention.
FIG. 29 is a diagram illustrating a shared user addition screen according to Embodiment 4 of the present invention.
FIG. 30 is a diagram illustrating a recording data window that displays recording data as a list according to Embodiment 4 of the present invention.
FIG. 31 is a sequence diagram illustrating a voice data synthesis process according to Embodiment 4 of the present invention.
FIG. 32 is a diagram illustrating a plurality of pieces of fragmentary voice data received by the cloud according to Embodiment 4 of the present invention.

### [Description of Embodiments]

Hereinafter, embodiments of the present invention will be described with reference to the drawings.

### [Embodiment 1]

### <1. Entire Configuration of Communication System>

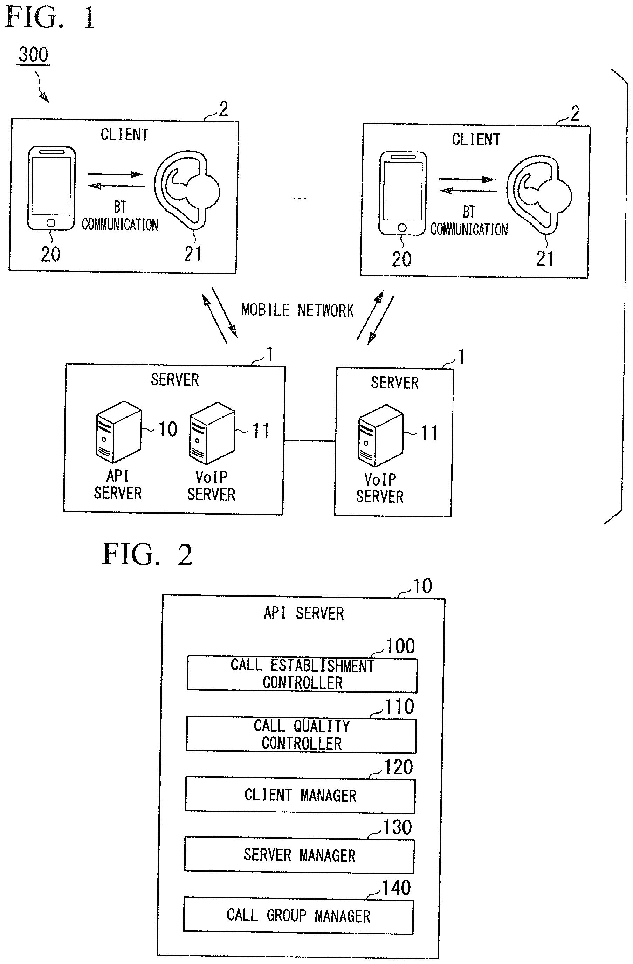

FIG. 1 is a diagram illustrating a schematic configuration of a communication system according to Embodiment 1 of the present invention. A communication system 300 of the present invention includes at least one servers 1 and a plurality of clients 2 connectable to the servers 1 via a mobile network such as those of GSM (registered trademark), 3G (registered trademark), 4G (registered trademark), WCDMA (registered trademark), or LTE (registered trademark).

The server 1 includes at least a voice over Internet protocol (VoIP) server 11 for controlling voice communication with the client 2, and at least one of the servers 1 included in the communication system 300 includes an application programmable interface (API) server 10 that manages connection of the client 2 and allocation of the VoIP server 11. The servers 1 may be formed of one server computer, and a plurality of server computers may be provided and respective functions may be realized on the respective server computers to form the servers 1. The respective servers 1 may be disposed to be distributed to respective regions of the world.

The server computer that forms the server 1 includes a CPU, a storage device (a main storage device, an auxiliary storage device, and the like) such as a ROM, a RAM, and a hard disk, an I/O circuit, and the like. The server 1 is connected to a wide area network according to a communication standard appropriate for cable communication such as TCP/IP and is configured to communicate with other servers 1 via the wide area network.

The API server 10 has the role of a management server that exchanges information necessary for a group call performed by multiple persons between a plurality of clients 2 participating in the group call when performing the group call, sends an instruction to the VoIP server 11 on the basis of the information obtained in the group call, and realizes the group call between the plurality of clients 2 participating in the group call. The API server 10 is realized on a server computer that forms the server 1.

The API server 10 can send an instruction to other VoIP servers 11 connectable via a network as well as the VoIP servers 11 disposed in the same server 1. This enables the API server 10 to identify a geographical position of the client 2 from information such as IP addresses of the plurality of clients 2 participating in the group call, select the VoIP server 11 to which the client 2 can connect with a short delay, and distribute the clients 2 to the VoIP server 11. Moreover, the API server 10 can detect a VoIP server 11 having a low operation rate among the plurality of VoIP servers 11 and distribute the clients 2 to the VoIP server 11.

The VoIP server 11 has the role of receiving an instruction from the API server 10 and controlling exchange (conversation) of speech packets between the respective clients 2. The VoIP server 11 is realized on a server computer that forms the server 1. The VoIP server 11 may be configured as an existing software switch of Internet protocol-private branch exchange (IP-PBX). The VoIP server 11 has a function of processing speech packets using an on-memory in order to realize a real-time call between the clients 2.

The client 2 includes a mobile communication terminal 20 possessed by a user and a headset 21 connected to the mobile communication terminal 20 by short range wireless communication such as Bluetooth communication. The mobile communication terminal 20 has the role of controlling communication of speech packets in voice call of users. The mobile communication terminal 20 is configured as an information terminal such as a tablet terminal or a smartphone which is designed with a size, shape, and weight to be able to be carried by users, and which includes a CPU, a storage device (a main storage device, an auxiliary storage device, and the like) such as a ROM, RAM, and a memory card, an I/O circuit, and the like.

The mobile communication terminal 20 is configured to be able to communicate with the server 1 and other clients 2 via a wide area network connected to a base station (not illustrated) according to a communication standard appropriate for wireless communication at a long range such as those of GSM (registered trademark), 3G (registered trademark), 4G (registered trademark), WCDMA (registered trademark), or LTE (registered trademark).

The mobile communication terminal 20 is configured to be able to communicate voice data to the headset 21 according to a short range wireless communication standard such as Bluetooth (registered trademark) (hereinafter referred to as a "first short range wireless communication standard"). Moreover, the mobile communication terminal 20 is configured to be able to communicate with a mobile communication terminal 20 at a short range according to a short range wireless communication standard such as Bluetooth low energy (BLE) (registered trademark) (hereinafter referred to as a "second short range wireless communication standard") which enables communication to be performed with less power than in the first short range wireless communication standard.

The headset 21 has the role of creating voice data on the basis of a speech spoken by a user, transmitting the created voice data to the mobile communication terminal 20, and reproducing speech on the basis of voice data transmitted from the mobile communication terminal 20. The headset 21 includes a CPU, a storage device (a main storage device, an auxiliary storage device, and the like) such as a ROM, a RAM, and a memory card, an I/O circuit such as a microphone or a speaker. The headset 21 is configured to be able to communicate voice data to the headset 21 according to a short range wireless communication standard such as Bluetooth (registered trademark). The headset 21 is preferably configured as an open-type headset so that a user wearing the same can hear external ambient sound.

The communication system 300 of the present embodiment having the above-described configuration can install the VoIP servers 11 in respective regions according to a use state of a group call service and manage the calls performed by the installed VoIP servers 11 with the aid of the API server 10 in an integrated manner. Therefore, the communication system 300 can execute connection between the clients 2 between multiple regions efficiently while reducing a communication delay.

### <2. Functional Configuration of Server>

FIG. 2 is a diagram illustrating a schematic functional configuration of the API server 10 according to Embodiment 1 of the present invention. The API server 10 includes a call establishment controller 100, a call quality controller 110, a client manager 120, a server manager 130, and a call group manager 140. These functional units are realized when a CPU control a storage device, an I/O circuit, and the like included in a server computer on which the API server 10 is realized.

The call establishment controller 100 is a functional unit that performs control of starting a group call between the client 2 that sends a group call start request and at least one of the other clients 2 included in a group call start request on the basis of the group call start request from the client 2. Upon receiving the group call start request from the client 2, the call establishment controller 100 instructs the call group manager 140 to be described later to create a new call group including the client 2 when the client 2 having sent the group call start request is not managed by the call group manager 140 and instructs the call group manager 140 to add the client 2 included in the group call start request to a call group including the client 2 when the client 2 having sent the group call start request is managed by the call group manager 140.

Upon instructing the call group manager 140 to create a new call group, the call establishment controller 100 communicates with a plurality of clients 2 participating in a new call group and identifies the geographical positions of the respective clients 2. The call establishment controller 100 may identify the geographical position of the client 2 on the basis of an IP address of the client 2 and may identify the geographical position of the client 2 on the basis of the information from a position identifying means such as GPS included in the mobile communication terminal 20 that forms the client 2. When the geographical positions of the plurality of clients 2 participating in the new call group are identified, the call establishment controller 100 extracts at least one of servers 1 disposed in a region connectable with a short delay from the identified positions of the plurality of clients 2 among the servers 1 managed by the server manager 130 to be described later and detects the server 1 including the VoIP server 11 having a low operation rate among the servers 1. The call establishment controller 100 instructs the plurality of clients 2 to start a group call via the VoIP server 11 included in the detected server 1.

The call quality controller 110 is a functional unit that controls the quality of communication between the plurality of clients 2 participating in the group call. The call quality controller 110 monitors a data transmission delay state of the group call performed by the clients 2 managed by the call group manager 140, and when a data transmission delay occurs in a certain client 2 (that is, the state of a communication line deteriorates due to the client 2 falling into a weak radio wave state), sends an instruction to the other clients 2 participating in the group call to suppress the data quality to decrease a data amount so that the client 2 can maintain communication. The call quality controller 110 may monitor the data transmission delay state of the client 2 by acquiring the communication states of the respective clients 2 at predetermined periods from the VoIP server 11 that controls the group call. When the data transmission delay state of the client 2 in which a data transmission delay has occurred is recovered, the call quality controller 110 instructs the other clients 2 participating in the group call to stop suppressing the data quality.

When the communication of a certain client 2 is lost (that is, the client 2 enters into a weak radio wave state and becomes unable to perform communication), the call quality controller 110 notifies the other clients 2 participating in the group call of the fact that the communication with the client 2 has been lost. The call quality controller 110 may detect that the communication with the client 2 has been lost by acquiring the communication states of the respective clients 2 at predetermined periods from the VoIP server 11 that controls the group call. When the call quality controller 110 detects that the communication with the client 2 with which the communication has been lost has been recovered, the call quality controller 110 notifies the other clients 2 participating in the group call of the fact and performs control so that the client 2 of which the communication has recovered may participate in the group call again.

The client manager 120 is a functional unit that manages client information which is information related to the client 2 that performs a group call. The client information managed by the client manager 120 may include at least identification information for uniquely identifying the client 2 corresponding to the client information. The client information may further include information such as the name of a user having the client 2 corresponding to the client information and information related to a geographical position of the client 2 corresponding to the client information. The client manager 120 may receive a client information registration request, a client information request, a client information removal request, and the like from the client 2 and perform the processes of registering, correcting, and removing the client information similarly in a service provided generally.

The server manager 130 is a functional unit that manages server information which is information related to the server 1 including the VoIP server 11 which can be instructed and controlled from the API server 10. The server information managed by the server manager 130 includes at least a geographical position of the server and the position (an IP address or the like) on a network of the server and may further include an operation rate of the VoIP server 11 included in the server and information related to an administrator of the server. The server manager 130 may receive a server information registration operation, a server information correction operation, and a server information removal operation by the administrator of the API server 10 and perform processes of registering, correcting, and removing the server information.

The call group manager 140 is a functional unit that controls call group information which is information related to a group (hereinafter referred to as a "client group") of the clients 2 that are performing a group call at present. The call group information managed by the call group manager 140 includes at least information (identification information registered in the client information related to the client 2) for identifying the client 2 participating in the group call corresponding to the call group information, information related to the VoIP server used in the group call, and a communication state (a data delay state, a communication loss state, and the like) of each of the clients 2 participating in the group call. The call group manager 140 may receive a call group creation instruction, a call group removal instruction, and a call group correction instruction from the call establishment controller 100 and the call quality controller 110 and perform processes of creating, correcting, and removing the call group information.

The API server 10 of the present embodiment having the above-described configuration can distribute group call requests from the clients 2 to the VoIP server 11 to which connection can be realized with a short delay on the basis of the positions of the clients 2 participating in the group call and the operation rates of the VoIP servers 11. Moreover, the API server 10 of the present embodiment can detect the life-or-death state of each client 2 that performs the group call via the VoIP servers 11 installed in respective regions and performs a failover process corresponding to a state. Therefore, it is possible to provide an optimal group call service corresponding to a state without troubling the users.

### <3. Functional Configuration of Client>

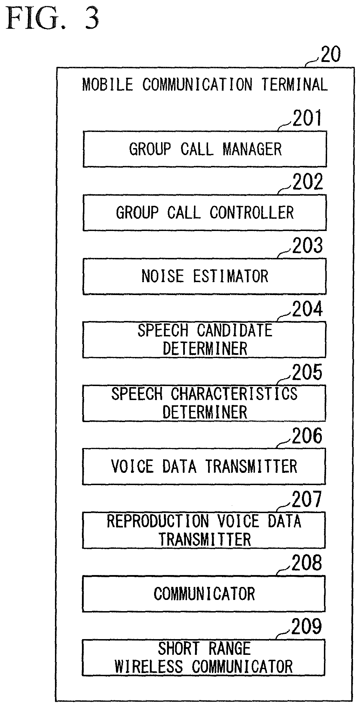

FIG. 3 is a diagram illustrating a schematic functional configuration of the mobile communication terminal 20 according to Embodiment 1 of the present invention. The mobile communication terminal 20 includes a group call manager 201, a group call controller 202, a noise estimator 203, a speech candidate determiner 204, a speech characteristics determiner 205, a voice data transmitter 206, a reproduction voice data transmitter 207, a communicator 208, and a short range wireless communicator 209. These functional units are realized when a CPU controls a storage device, an I/O circuit, and the like included in the mobile communication terminal 20.

The group call manager 201 is a functional unit that exchanges information related to management of the group call with the API server 10 via the communicator 208 and manages the start and the end of the group call. The group call manager 201 transmits various requests such as a group call start request, a client addition request, and a group call end request to the API server 10 and sends an instruction to the group call controller 202 to be described later according to a response of the API server 10 with respect to the request to thereby manage the group call.

The group call controller 202 is a functional unit that controls transmission/reception of voice data with other clients 2 participating in the group call on the basis of the instruction from the group call manager 201 and transmission/reception of voice data with the headset 21. The group call controller 202 detects a speech of the voice data and controls the data quality of the voice data corresponding to the speech of the user received from the headset 21 with the aid of the noise estimator 203, the speech candidate determiner 204, and the speech characteristics determiner 205 to be described later.

The noise estimator 203 is a functional unit that estimates an average ambient sound from the voice data corresponding to the speech of the user received from the headset 21. The voice data corresponding to the speech of the user received from the headset 21 includes the speech of the user and ambient sound. Existing methods such as a minimum mean square error (MMSE) estimation, a maximum likelihood method, and a maximum a posteriori probability estimation may be used as a noise estimation method used by the noise estimator 203. For example, the noise estimator 203 may sequentially update the power spectrum of the ambient sound according to the MMSE standard on the basis of the speech presence probability estimation of each sample frame so that the ambient sound which is noise within the voice data can be estimated using the power spectrum of the ambient sound.

The speech candidate determiner 204 is a functional unit that determines sound different from the average ambient sound from the voice data as a speech candidate on the basis of the estimation result of the ambient sound serving as noise, estimated by the noise estimator 203. The speech candidate determiner 204 compares a long-term variation in spectrum over several frames with the power spectrum of the ambient sound estimated by the noise estimator 203 to thereby determine the part of abnormal voice data as the voice data of the speech of the user.

The speech characteristics determiner 205 is a functional unit that determines the part of the voice data estimated as unexpected ambient sound other than the sound of a person with respect to the part that the speech candidate determiner 204 has determined to be the voice data of the speech of the user. The speech characteristics determiner 205 estimates the content of a spectrum period component in the part that the speech candidate determiner 204 has determined to be the voice data of the speech of the user to thereby determine whether voice data based on sound made from the throat or the like of a person is present in the part. Moreover, the speech characteristics determiner 205 evaluates the distance to a speaker and whether a speech waveform is a direct wave by estimating the degree of echo from the speech waveform and determines whether the speech waveform is voice data based on the sound spoken by the speaker.

The voice data transmitter 206 encodes the voice data in a range excluding the part that the speech characteristics determiner 205 has determined to be the unexpected ambient sound from the range that the speech candidate determiner 204 has determined to be the speech candidate and transmits the encoding result to the VoIP server. When encoding the voice data, the voice data transmitter 206 encodes the voice data with a communication quality and an encoding scheme determined by the group call controller 202 on the basis of the instruction from the communication quality controller 110 of the API server 10.

The reproduction voice data transmitter 207 receives and decodes the voice data from the VoIP server via the communicator 208 and transmits the decoded voice data to the headset 21 via the short range wireless communicator 209.

The communicator 208 is a functional unit that controls communication via a mobile network. The communicator 208 is realized using a communication interface of a general mobile communication network or the like. The short range wireless communicator 209 is a functional unit that controls short range wireless communication such as Bluetooth (registered trademark). The short range wireless communicator 209 is realized using a general short range wireless communication interface.

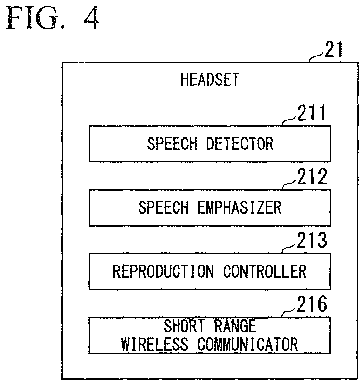

FIG. 4 is a diagram illustrating a schematic functional configuration of the headset 21 according to Embodiment 1 of the present invention. The headset 21 includes a speech detector 211, a speech emphasizer 212, a reproduction controller 213, and a short range wireless communicator 216. These functional units are realized when a CPU controls a storage device, an I/O circuit, and the like included in the headset 21.

The speech detector 211 is a functional unit that detects a speech of a user wearing the headset 21 and converts the speech to voice data. The speech detector 211 includes a microphone, an A/D conversion circuit, and a voice data encoder, and the like included in the headset 21. The speech detector 211 preferably includes at least two microphones.

The speech emphasizer 212 is a functional unit that emphasizes the speech of a user wearing the headset 21 so that the speech can be detected from the voice data detected and converted by the speech detector 211. The speech emphasizer 212 emphasizes the speech of a user relatively with respect to ambient sound using an existing beam forming algorithm, for example. With the process performed by the speech emphasizer 212, since the ambient sound included in the voice data is suppressed relatively with respect to the speech of the user, it is possible to improve the sound quality and to lower the performance and the calculation load of the signal processing of a subsequent stage. The voice data converted by the speech emphasizer 212 is transmitted to the mobile communication terminal 20 via the short range wireless communicator 216.

The reproduction controller 213 is a functional unit that reproduces the voice data received from the mobile communication terminal 20 via the short range wireless communicator 216. The reproduction controller 213 includes a voice data decoder, a D/A conversion circuit, a speaker, and the like included in the headset 21. When a speech in a speech segment of the voice data received from the mobile communication terminal 20 is reproduced, the reproduction controller 213 reproduces the voice data reproduced on the basis of the ambient sound detected by the microphone included in the headset 21 in such a form that the user can easily hear the voice data. The reproduction controller 213 may perform a noise canceling process on the basis of background noise estimated by the speech detector to cancel out the ambient sound heard by the user so that the user easily hear the reproduction sound and may perform a process of increasing a reproduction volume according to the magnitude of background noise so that the user easily hear the reproduction sound relatively with respect to the background noise.

The client 2 of the present embodiment having the above-described configuration can reproduce a clear speech while reducing the amount of voice data transmitted to a communication path by performing multilateral voice data processing which involves various estimation processes on a speech and ambient sound. In this way, it is possible to reduce power consumption of respective devices that form the client 2 and improve a user experience (UX) of a call significantly.

Hereinafter, a speech detection function, a communication control function, and a speech reproduction control function which are characteristics functions of the communication system 300 having the above-described configuration will be described with reference to the sequence chart illustrating the flow of operations.

### <4. Speech Detection Function>

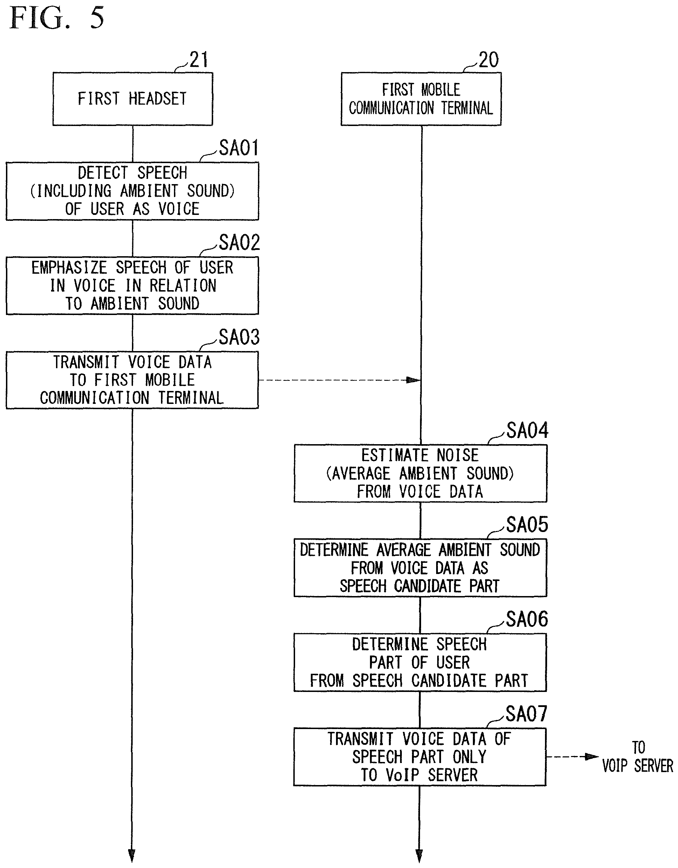

FIG. 5 is a sequence chart illustrating the flow of processes executed on the headset and the mobile communication terminal related to the speech detection function according to Embodiment 1 of the present invention.

### [Step SA01]

The speech detector 211 detects a speech of a user including ambient sound as a voice and converts the speech into voice data.

### [Step SA02]

The speech emphasizer 212 emphasizes the speech sound of the user included in the voice data converted in step SA01 relatively with respect to the ambient sound.

### [Step S03]

The short range wireless communicator 216 transmits the voice data converted in step SA02 to a first mobile communication terminal 20.

### [Step SA04]

The noise estimator 203 analyzes the voice data received from a first headset to estimate ambient sound which is noise included in the voice data.

### [Step SA05]

The speech candidate determiner 204 determines sound different from an average ambient sound within the voice data as a speech candidate on the basis of the estimation result of the ambient sound serving as the noise, obtained by the noise estimator 203 in step SA04.

### [Step SA06]

The speech characteristics determiner 205 determines a part of voice data estimated to be an unexpected ambient sound and a speech spoken from a position distant from a microphone of a headset with respect to a part of the voice data that the speech candidate determiner 204 has determined to be the speech candidate of the user in step SA05.

### [Step SA07]

The group call controller 202 encodes the voice data in a range excluding the part that the speech characteristics determiner 205 has determined to be the unexpected ambient sound or the speech spoken from the position distant from the microphone of the headset in step SA06 from the range determined as the speech candidate in step SA05 with a communication quality and an encoding scheme determined by exchange with the VoIP server 11 and transmits the encoded voice data to the VoIP server.

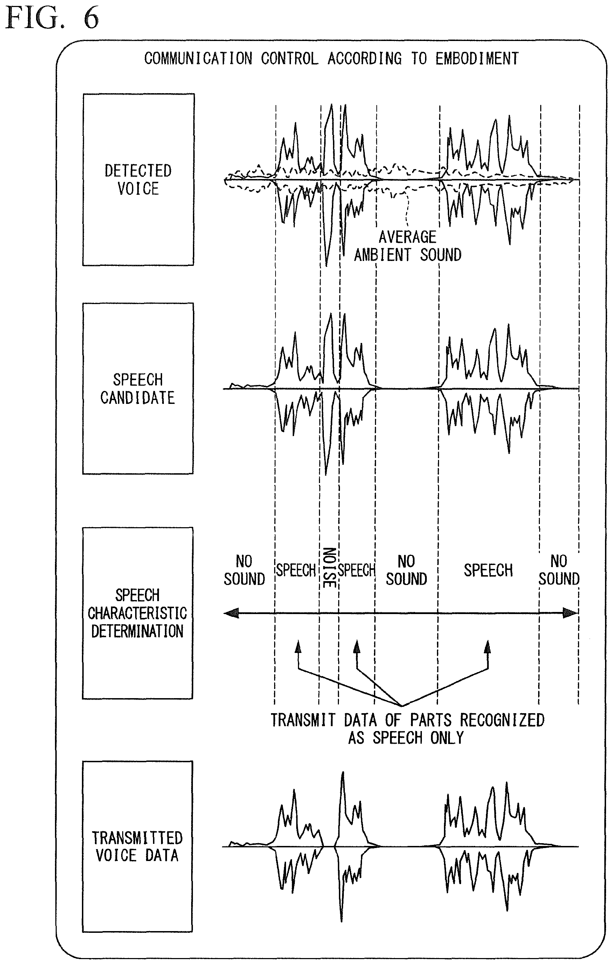

FIG. 6 is a diagram illustrating an image of conversion until the voice data to be transmitted is generated from the sound detected according to the sequence chart of FIG. 5 according to Embodiment 1 of the present invention. As illustrated in FIG. 6, in the communication system of the present invention, since only the part necessary for reproduction of the speech is extracted from the detected sound, the amount of the voice data encoded and transmitted to the VoIP server 11 can be reduced as compared to the voice data transmitted in a general communication system.

### <5. Speech Reproduction Control Function>

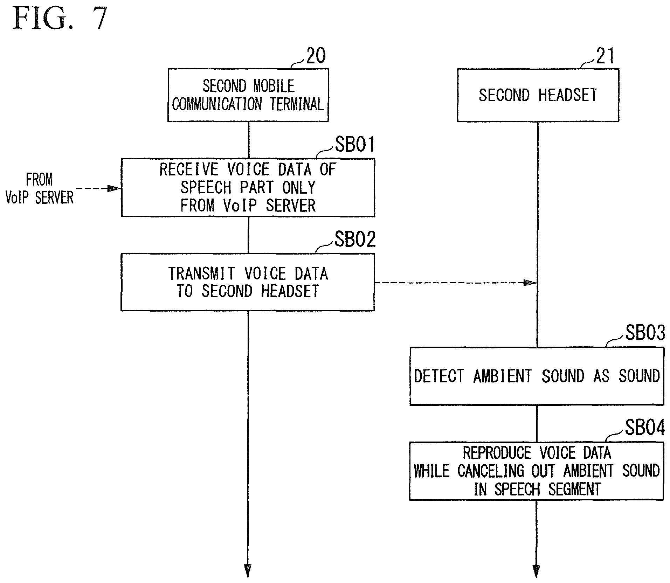

FIG. 7 is a sequence chart illustrating the flow of processes executed on the headset and the mobile communication terminal related to the speech reproduction control function according to Embodiment 1 of the present invention.

### [Step SB01]

The group call controller 202 decodes the data received according to the encoding scheme determined by exchange with the VoIP server 11 into voice data.

### [Step SB02]

The reproduction voice data transmitter 207 transmits the voice data decoded in step SB02 to a second headset 21.

### [Step SB03]

The speech detector 211 detects ambient sound as a sound and converts the sound into voice data.

### [Step SB04]

The reproduction controller 213 reproduces the voice data received from a second mobile communication terminal 20 while performing processing such that a reproduction sound is easy to be heard relatively with respect to the ambient sound detected in step SB03 in a speech segment of the voice data.

In the present embodiment, although the second headset 21 cancels out the ambient sound to reproduce the voice data received from the second mobile communication terminal 20, there is no limitation thereto. For example, the second headset 21 may reproduce the voice data received from the second mobile communication terminal 20 as it is without canceling out the ambient sound.

### <6. Communication Control Function>

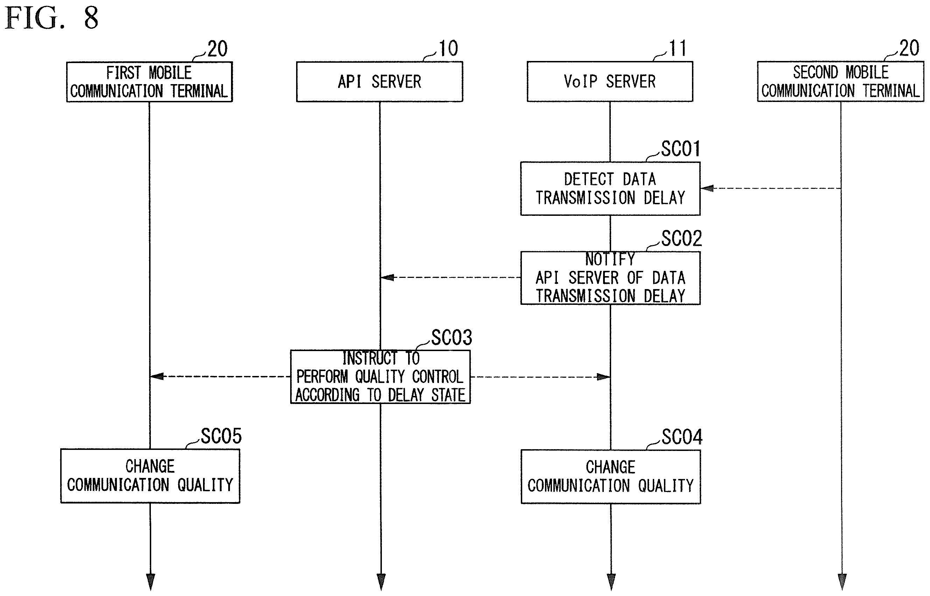

FIG. 8 is a sequence chart illustrating the flow of processes executed on the API server, the VoIP server, and the mobile communication terminal related to the communication control function when a data transmission delay occurs according to Embodiment 1 of the present invention.

### [Step SC01]

The VoIP server 11 detects a data transmission delay in the second mobile communication terminal 20.

### [Step SC02]

The VoIP server 11 notifies the API server 10 of a data transmission delay state of the second mobile communication terminal 20.

### [Step SC03]

The communication quality controller 110 determines a communication quality corresponding to the data transmission delay state of the second mobile communication terminal 20 notified from the VoIP server 11 and instructs the VoIP server 11 and the first mobile communication terminal 20 belonging to the same client group as the second mobile communication terminal 20 to use the determined communication quality.

### [Step SC04]

The VoIP server 11 changes the communication quality of the client group to which the second mobile communication terminal 20 belongs to the communication quality instructed in step SC03.

### [Step SC05]

The first mobile communication terminal 20 changes the communication quality to the communication quality instructed in step SC03.

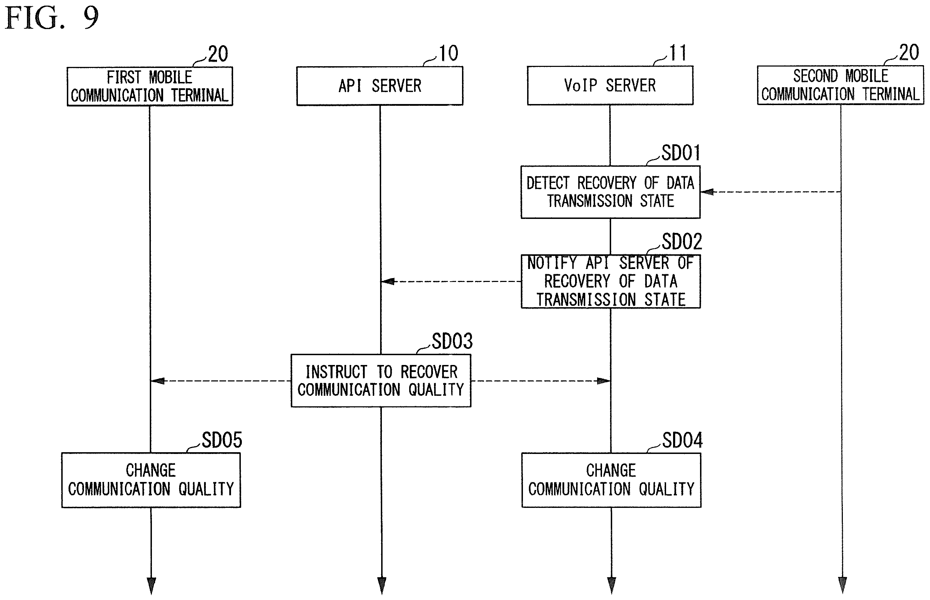

FIG. 9 is a sequence chart illustrating the flow of processes executed on the API server, the VoIP server, and the mobile communication terminal related to the communication control function when the data transmission state is recovered according to Embodiment 1 of the present invention.

### [Step SD01]

The VoIP server 11 detects recovery of the data transmission state of the second mobile communication terminal 20.

### [Step SD02]

The VoIP server 11 notifies the API server 10 of the recovery of the data transmission state of the second mobile communication terminal 20.

### [Step SD03]

The communication quality controller 110 instructs the VoIP server 11 and the first mobile communication terminal 20 belonging to the same client group as the second mobile communication terminal 20 so as to recover the communication quality in response to the recovery of the data transmission state of the second mobile communication terminal 20 notified from the VoIP server 11.

### [Step SD04]

The VoIP server 11 recovers the communication quality of the client group to which the second mobile communication terminal 20 belongs.

### [Step SD05]

The first mobile communication terminal 20 recovers the communication quality.

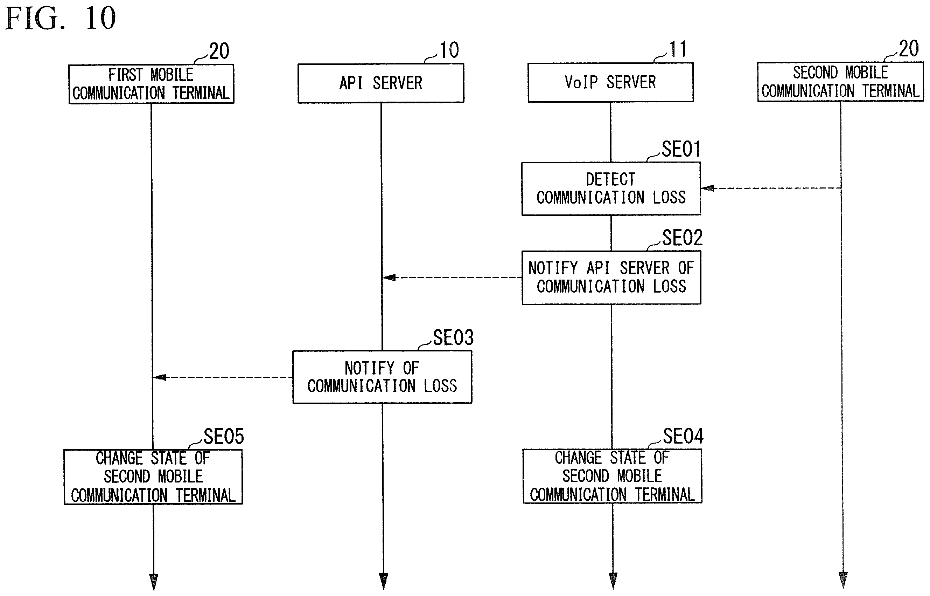

FIG. 10 is a sequence chart illustrating the flow of processes executed on the API server, the VoIP server, and the mobile communication terminal related to the communication control function when a communication loss occurs according to Embodiment 1 of the present invention.

### [Step SE01]

The VoIP server 11 detects that communication with the second mobile communication terminal 20 is lost.

### [Step SE02]

The VoIP server 11 notifies the API server 10 of the communication loss with the second mobile communication terminal 20.

### [Step SE03]

The communication quality controller 110 notifies the first mobile communication terminal 20 belonging to the same client group as the second mobile communication terminal 20 of the communication loss with the second mobile communication terminal 20.

### [Step SE04]

The VoIP server 11 changes the information related to the communication state of the second mobile communication terminal 20 to a communication loss state.

### [Step SE05]

The first mobile communication terminal 20 changes the information related to the communication state of the second mobile communication terminal 20 to a communication loss state.

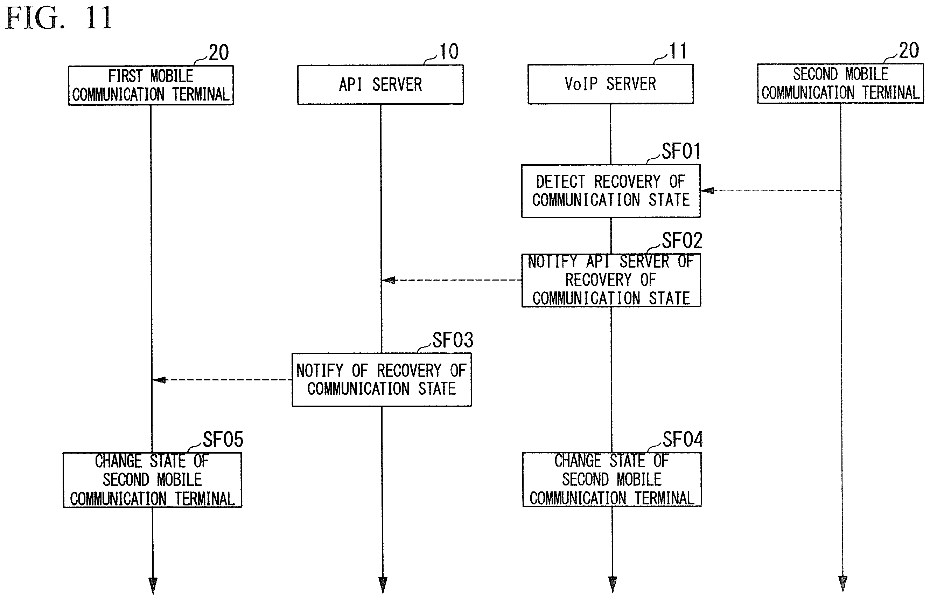

FIG. 11 is a sequence chart illustrating the flow of processes executed on the API server, the VoIP server, and the mobile communication terminal related to the communication control function when a communication loss occurs according to Embodiment 1 of the present invention.

### [Step SF01]

The VoIP server 11 detects that the communication state of the second mobile communication terminal 20 has been recovered.

### [Step SE02]

The VoIP server 11 notifies the API server 10 of the recovery of the communication state of the second mobile communication terminal 20.

### [Step SE03]

The communication quality controller 110 notifies the first mobile communication terminal 20 belonging to the same client group as the second mobile communication terminal 20 of the recovery of the communication with the second mobile communication terminal 20.

### [Step SE04]

The VoIP server 11 changes the information related to the communication state of the second mobile communication terminal 20 to a normal state.

### [Step SE05]

The first mobile communication terminal 20 changes the information related to the communication state of the second mobile communication terminal 20 to a normal state.

As described above, according to Embodiment 1 of the present invention, the amount of data transmitted via a mobile network in a multiple-to-multiple group call decreases, whereby it is possible to reduce the power consumption in the mobile communication terminal and the headset and to suppress speech delay even when a communication bandwidth is not sufficient. Furthermore, by detecting only the speech segment automatically, the noise is reduced without disturbing other activities nor using hands and only the content of a speech of a call counterpart is delivered clearly, whereby the user experience (UX) of a call can be improved significantly.

In Embodiment 1, the program for executing the respective functions of the mobile communication terminal 20 is stored in the memory in the mobile communication terminal 20. The CPU in the mobile communication terminal 20 can execute the respective functions by reading the program from the memory and executing the program. Moreover, the program for executing the respective functions of the headset 21 is stored in the memory in the headset 21. The CPU in the headset 21 can execute the respective functions by reading the program from the memory and executing the program.

In Embodiment 1, the program for executing the respective functions of the API server 10 is stored in the memory in the API server 10. The CPU in the API server 10 can execute the respective functions by reading the program from the memory and executing the program. Moreover, the program for executing the respective functions of the VoIP server 11 is stored in the memory in the VoIP server 11. The CPU in the VoIP server 11 can execute the respective functions by reading the program from the memory and executing the program.

In Embodiment 1, some of the functions of the headset 21 may be installed in the mobile communication terminal 20. For example, the mobile communication terminal 20 may include the speech emphasizer 212 illustrated in FIG. 4 instead of the headset 21. Moreover, in Embodiment 1, some of the functions of the mobile communication terminal 20 may be installed in the headset 21. For example, the headset 21 may include all or some of the group call manager 201, the group call controller 202, the noise estimator 203, the speech candidate determiner 204, the speech characteristics determiner 205, and the voice data transmitter 206 illustrated in FIG. 3 instead of the mobile communication terminal 20.

In Embodiment 1, some of the functions of the headset 21 and the mobile communication terminal 20 may be installed in the VoIP server 11. For example, the VoIP server 11 may include the speech emphasizer 212 illustrated in FIG. 4 instead of the headset 21. Moreover, the VoIP server 11 may include all or some of the group call manager 201, the group call controller 202, the noise estimator 203, the speech candidate determiner 204, the speech characteristics determiner 205, and the voice data transmitter 206 illustrated in FIG. 3 instead of the mobile communication terminal 20. In this case, since the VoIP server 11 has high-performance functions, the VoIP server 11 can perform high-accuracy noise estimation, high-accuracy speech candidate determination, and high-accuracy speech characteristic determination.

### [Embodiment 2]

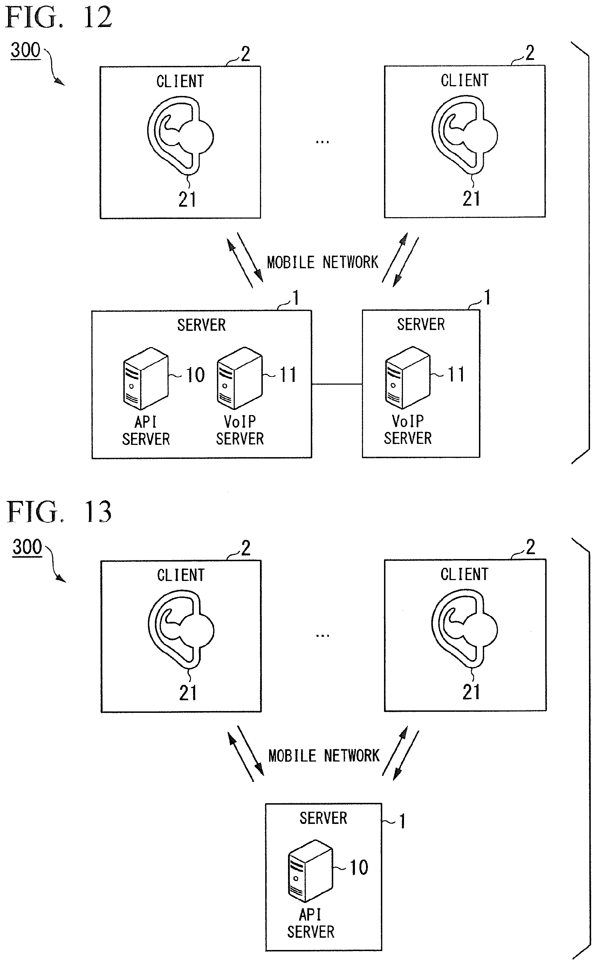

Hereinafter, Embodiment 2 of the present invention will be described. FIG. 12 is a schematic block diagram of a communication system according to Embodiment 2 of the present invention. Portions in FIG. 12 corresponding to the respective portions of FIG. 1 will be denoted by the same reference numerals and the description thereof will be omitted.

In Embodiment 1, it has been described that the client 2 includes the mobile communication terminal 20 and the headset 21. On the other hand, in Embodiment 2, it is assumed that the client 2 does not include the mobile communication terminal 20, but the headset 21 includes the functions of the mobile communication terminal 20. Moreover, the API server 10 and the VoIP server 11 of Embodiment 2 have configurations similar to those of the API server 10 and the VoIP server 11 of Embodiment 2.

Specifically, the headset 21 illustrated in FIG. 12 includes the respective functions (the group call manager 201, the group call controller 202, the noise estimator 203, the speech candidate determiner 204, the speech characteristics determiner 205, and the voice data transmitter 206) of the mobile communication terminal 20 illustrated in FIG. 3. Due to this, the headset 21 can estimate noise on the basis of voice data (step SA04 in FIG. 5), determine the speech candidate on the basis of the noise estimation result (step SA05 in FIG. 5), determine the speech part of the user on the basis of the speech candidate (step SA06 in FIG. 5), and transmit the voice data of the speech part only to the VoIP server 11 (step SA07 in FIG. 5) instead of the mobile communication terminal 20 of Embodiment 1.

As described above, according to Embodiment 2 of the present invention, since it is not necessary to provide the mobile communication terminal 20 in the client 2, it is possible to simplify the configuration of the communication system 300 and to reduce the cost necessary for the entire system. Moreover, since it is not necessary to provide the short range wireless communicator 216 in the headset 21 and it is not necessary to perform wireless communication in the client 2, it is possible to prevent delay in processing associated with wireless communication.

In Embodiment 2, the program for executing the respective functions of the headset 21 is stored in the memory in the headset 21. The CPU in the headset 21 can execute the respective functions by reading the program from the memory and executing the program.

### [Embodiment 3]

Hereinafter, Embodiment 3 of the present invention will be described. FIG. 13 is a schematic block diagram of a communication system according to Embodiment 3 of the present invention. Portions in FIG. 13 corresponding to the respective portions of FIG. 1 will be denoted by the same reference numerals and the description thereof will be omitted.

In Embodiment 1, it has been described that the client 2 includes the mobile communication terminal 20 and the headset 21. On the other hand, in Embodiment 3, it is assumed that the client 2 does not include the mobile communication terminal 20, but the headset 21 includes the functions of the mobile communication terminal 20. In Embodiments 1 and 2, it has been described that the server 1 includes the API server 10 and the VoIP server 11. On the other hand, in Embodiment 3, the server 1 does not include the VoIP server 11 but each client 2 includes the functions of the VoIP server 11.

Specifically, each client 2 illustrated in FIG. 13 has the respective functions of the VoIP server 11, and the respective clients 2 communicate directly with each other by peer-to-peer (P2P) communication without via the VoIP server 11. The API server 10 manages communication between the plurality of clients 2 in order to determine a connection destination preferentially. Due to this, the client 2 can detect the delay in data transmission (step SC01 in FIG. 8), detect the recovery of the data transmission state (step SD01 in FIG. 9), change the communication quality (step SC04 in FIG. 8 and step SD04 in FIG. 9), detect the communication loss (step SE01 in FIG. 10), detect the recovery of a communication state (step SF01 in FIG. 11), and change the state of the mobile communication terminal 20 (step SE04 in FIG. 10 and step SF04 in FIG. 11) instead of the VoIP server 11 of Embodiment 2.

As described above, according to Embodiment 3 of the present invention, since it is not necessary to provide the VoIP server 11 in the server 1, it is possible to simplify the configuration of the communication system 300 and to reduce the cost necessary for the entire communication system 300. Moreover, since the client 2 and the API server 10 do not need to communicate with the VoIP server 11, it is possible to prevent the delay in processing associated with the communication between the client 2 and the VoIP server 11 and the delay in processing associated with the communication between the API server 10 and the VoIP server 11.

In Embodiment 3, the program for executing the respective functions of the mobile communication terminal 20 is stored in the memory in the mobile communication terminal 20. The CPU in the mobile communication terminal 20 can execute the respective functions by reading the program from the memory and executing the program. Moreover, the program for executing the respective functions of the headset 21 is stored in the memory in the headset 21. The CPU in the headset 21 can execute the respective functions by reading the program from the memory and executing the program. The program for executing the respective functions of the API server 10 is stored in the memory in the API server 10. The CPU in the API server 10 can execute the respective functions by reading the program from the memory and executing the program.

### [Embodiment 4]

Hereinafter, Embodiment 4 of the present invention will be described. Conventionally, a transceiver has been used as a voice communication tool for business use. In an environment where a transceiver is used, since a communication range thereof is limited by the arrival distance of radio waves, there may be a case in which it is not possible to confirm whether the speech content has reached a call counterpart. Therefore, in the conventional transceiver, it was necessary to ask a call counterpart whether the speech content has arrived repeatedly or record the speech content in a recording apparatus so that the speech content can be ascertained later.

Japanese Patent Application Publication No. 2005-234666 discloses means for recording a communication content in a system network including a push-to-talk over cellular (PoC) server and a group list management server (GLMS).

However, in a communication system having a function of recording a conversation content, when all pieces of voice data are recorded regardless of whether the voice data contains a conversation, there is a problem that the data volume increases.

Therefore, an object of Embodiment 4 of the present invention is to provide a service providing method, an information processing apparatus, a program, and a recording medium capable of reducing the volume of recorded voice data.

### <7. Entire System Configuration>

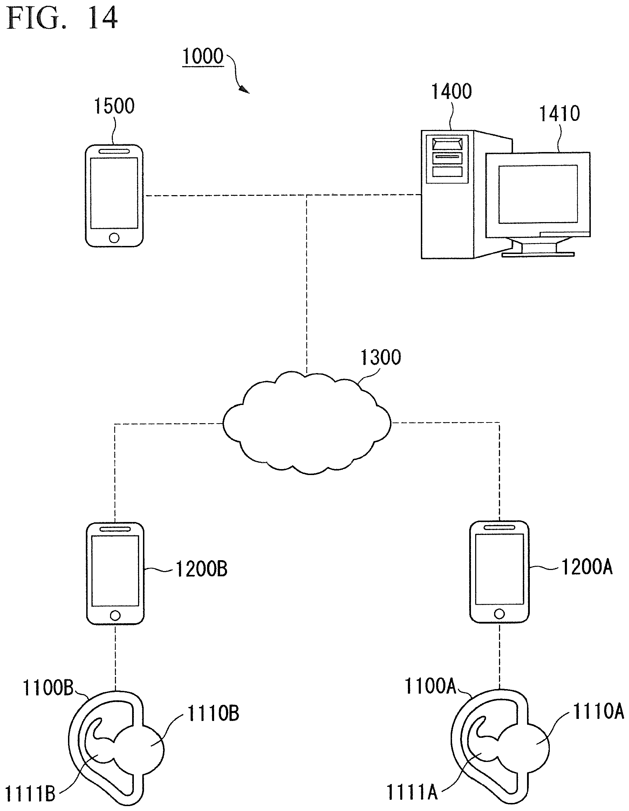

FIG. 14 is a schematic block diagram of a communication system according to Embodiment 4 of the present invention. A communication system 1000 of Embodiment 4 includes a first headset 1100A, a second headset 1100B, a first mobile communication terminal 1200A, a second mobile communication terminal 1200B, a cloud 1300, a computer 1400, a display 1410, and a mobile communication terminal 1500.

The first headset 1100A is worn on the ear of a user and includes a button 1110A and a communicator 1111A. The button 1110A functions as a manual switch. The communicator 1111A includes a microphone as a sound input unit and a speaker as a sound output unit. The first headset 1100A includes a chip for wirelessly connecting to the first mobile communication terminal 1200A.

The first mobile communication terminal 1200A is a mobile phone such as a smartphone, a tablet terminal, or the like and is connected to the cloud 1300 that provides a service. The first headset 1100A detects voice data indicating the sound spoken from the user using a microphone and transmits the detected voice data to the first mobile communication terminal 1200A. The first mobile communication terminal 1200A transmits the voice data received from the first headset 1100A to the cloud 1300. Moreover, the first mobile communication terminal 1200A transmits the voice data detected by the second headset 1100B, received from the cloud 1300 to the first headset 1100A. The first headset 1100A reproduces the voice data received from the first mobile communication terminal 1200A using a speaker.

A second headset 1100B, a button 11 10B, a communicator 1111B, and a second mobile communication terminal 1200B have configurations similar to the first headset 11 00A, the button 111 0A, the communicator 1111A, and the first mobile communication terminal 1200A, respectively, and the detailed description thereof will be omitted.

The cloud 1300 collects a plurality of pieces of fragmentary voice data from the first mobile communication terminal 1200A and the second mobile communication terminal 1200B, synthesizes the plurality of collected pieces of fragmentary voice data to generate synthetic voice data, and stores the generated synthetic voice data for a predetermined period (for example, 6 months). A user can acquire the synthetic voice data from the cloud 1300 using the first mobile communication terminal 1200A or the second mobile communication terminal 1200B connected to the cloud 1300. The details of the synthetic voice data will be described later.

The computer 1400 is a desktop computer and is not limited thereto. For example, the computer 1400 may be a note-type computer. The computer 1400 is connected to the display 1410. The display 1410 is a display device such as a liquid crystal display.

The computer 1400 is used by a user having the administrator right. A user having the administrator right is a user who can perform various settings (for example, assigning various rights to users, changing accounts, and inviting users) of the communication system 1000. Examples of the user having the administrator right include a tenant administrator and a manager. The tenant administrator has the right to manage all tenants and can register or remove users within the tenant. A tenant is a contract entity who signs on a system use contract. The tenant administrator identifies users using a mail address or the like. The manager is a user having the right to create a room in the tenant and register a terminal. The manager also identifies users using a mail address or the like similarly to the tenant administrator.

Examples of a user who does not have the administrator right include a general user and a shared user. The general user is an ordinary user participating in a group call. The tenant administrator and the manager specify general users using a mail address or the like. On the other hand, the shared user is a user who participates in a group call, but the tenant administrator and the manager do not specify shared users using a mail address or the like. The account of a shared user is used for count the number of accounts for charging.

The mobile communication terminal 1500 is used by a user (a tenant administrator, a manager, or the like) having the administrator right. The mobile communication terminal 1500 is a mobile phone such as a smartphone, a tablet terminal, or the like and is connected to the cloud 1300 that provides a service.

The user (the tenant administrator, the manager, or the like) having the administrator right can perform various settings of the communication system 1000 using the computer 1400 or the mobile communication terminal 1500.

Hereinafter, when the first headset 1100A and the second headset 1100B are not distinguished from each other, the headset will be referred to simply as a headset 1100. Moreover, when the first mobile communication terminal 1200A and the second mobile communication terminal 1200B are not distinguished from each other, the mobile communication terminal will be referred to simply as a mobile communication terminal 1200.

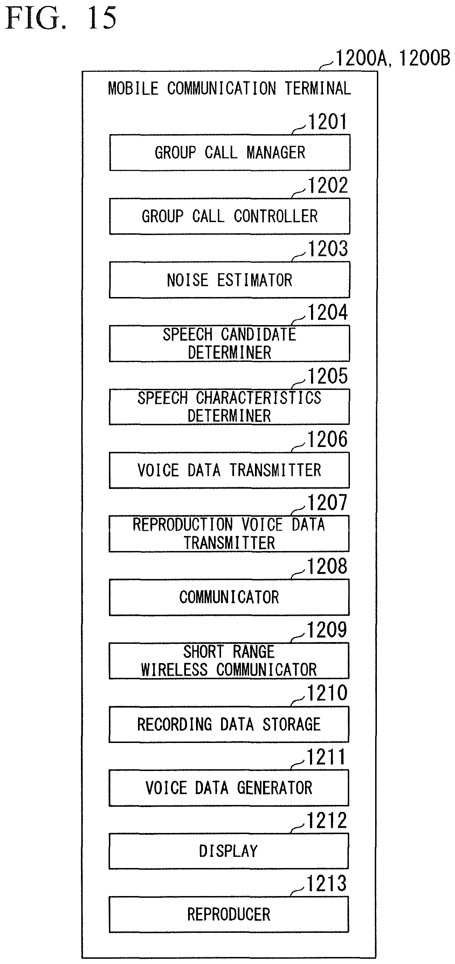

FIG. 15 is a block diagram illustrating a configuration of a mobile communication terminal according to Embodiment 4 of the present invention. The mobile communication terminal 1200 includes a group call manager 1201, a group call controller 1202, a noise estimator 1203, a speech candidate determiner 1204, a speech characteristics determiner 1205, a voice data transmitter 1206, a reproduction voice data transmitter 1207, a communicator 1208, a short range wireless communicator 1209, a recording data storage 1210, a voice data generator 1211, a display 1212, and a reproducer 1213.

The group call manager 1201, the group call controller 1202, the noise estimator 1203, the speech candidate determiner 1204, the speech characteristics determiner 1205, the voice data transmitter 1206, the reproduction voice data transmitter 1207, the communicator 1208, and the short range wireless communicator 1209 of Embodiment 4 have configurations similar to the group call manager 201, the group call controller 202, the noise estimator 203, the speech candidate determiner 204, the speech characteristics determiner 205, the voice data transmitter 206, the reproduction voice data transmitter 207, the communicator 208, and the short range wireless communicator 209 illustrated in FIG. 3 of Embodiment 1, respectively, and the detailed description thereof will be omitted.

The recording data storage 1210 temporarily stores voice data (voice data before synthesis) acquired by the headset 1100 that can communicate with the mobile communication terminal 1200 as recording data. The voice data generator 1211 generates fragmentary voice data indicating a speech in a speech period of the user who uses the headset 1100 on the basis of the recording data stored in the recording data storage 1210. Although the details will be described later, the voice data generator 1211 assigns a user ID, a speech start time, and a speech end time to the generated fragmentary voice data as metadata. The details of the fragmentary voice data generated by the voice data generator 1211 will be described later. The display 1212 is a touch panel display, for example. The reproducer 1213 is a speaker that reproduces voice data, for example.

A block diagram illustrating a configuration of the headset 1100 of Embodiment 4 is similar to the block diagram of the headset 21 of Embodiment 1 illustrated in FIG. 4.

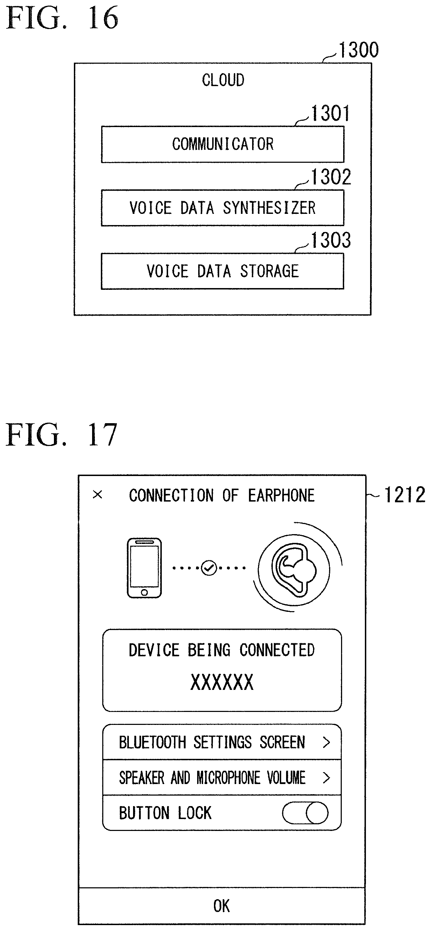

Specifically, FIG. 16 is a block diagram illustrating a configuration of a cloud according to Embodiment 4 of the present invention. The cloud 1300 is an information processing apparatus that provides voice data of a conversation performed using the headset 1100. The cloud 1300 includes a communicator 1301, a voice data synthesizer 1302, and a voice data storage 1303.

The communicator 1301 communicates with the mobile communication terminal 1200, the computer 1400, and the mobile communication terminal 1500. The voice data synthesizer 1302 generates synthetic voice data by synthesizing a plurality of pieces of fragmentary voice data received from the first mobile communication terminal 1200A and the second mobile communication terminal 1200B. The details of the synthetic voice data generated by the voice data synthesizer 1302 will be described later. The voice data storage 1303 stores the synthetic voice data generated by the voice data synthesizer 1302.

### <8. Connection between Headset and Mobile Communication Terminal>

FIG. 17 is a diagram illustrating a connection state display screen that displays a connection state between a headset (an earphone) and a mobile communication terminal according to Embodiment 4 of the present invention. The connection state display screen illustrated in FIG. 17 is displayed on the display 1212 of the mobile communication terminal 1200. Identification information ("xxxxxx" in FIG. 17) for identifying the headset 1100 connected to the mobile communication terminal 1200 is displayed on the display 1212. The mobile communication terminal 1200 and the headset 1100 are connected using Bluetooth (registered trademark) or the like and various pieces of control data as well as voice data are transmitted.

### <9. Login>

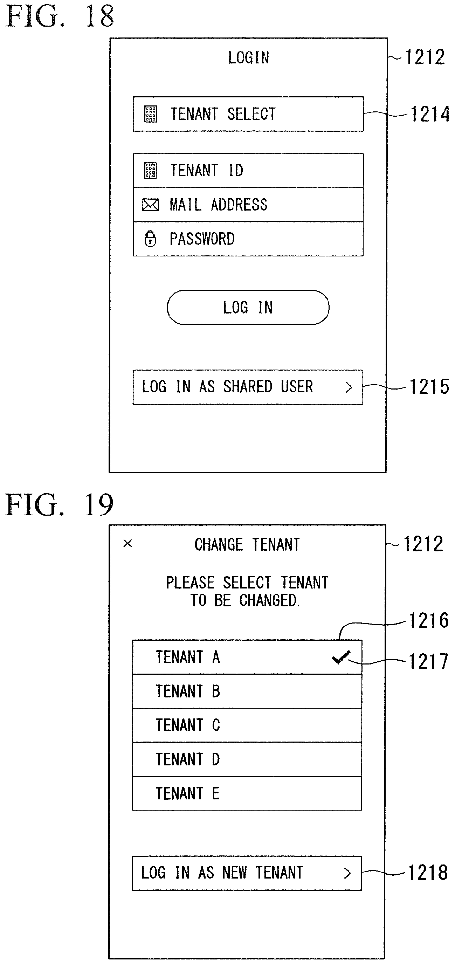

FIG. 18 is a diagram illustrating a login screen displayed when logging into the communication system according to Embodiment 4 of the present invention. A user can log into the communication system 1000 by inputting login information (a tenant ID, a mail address, and a password) on the login screen illustrated in FIG. 18. The tenant ID is a symbol for identifying tenants and is represented by an N-digit number, characters, and the like.

The communication system 1000 is a cloud service for business use. Due to this, a tenant select key 1214 and a shared user login key 1215 are displayed on the login screen. When a user selects (taps) the tenant select key 1214, a tenant change screen (FIG. 19) to be described later is displayed on the display 1212. On the other hand, when a user selects (taps) the shared user login key 1215, the user can log in as a shared user without inputting login information. A shared user may be authenticated using code information (for example, a QR code (registered trademark)) provided to a shared user by the user having the administrator right. The details of the shared user will be described later.

FIG. 19 is a diagram illustrating a tenant change screen displayed when changing a tenant according to Embodiment 4 of the present invention. A tenant list 1216 and a new tenant add key 1218 are displayed on the tenant change screen. A check mark 1217 is displayed next to a tenant A selected by default. Moreover, a user can select tenants B to E who have been selected in the past from the tenant list 1216 again.

The user can add a new tenant by selecting (tapping) the new tenant add key 1218. When a tenant is selected by the user, the login screen illustrated in FIG. 18 is displayed on the display 1212, and the user can log in by inputting login information (ID, a mail address, and a password). A user having logged in as a tenant can participate into a room. A room is a unit for managing calls in respective groups. A room is created and removed by a user having the administrator right.

### <10. Participation in Room and Creation of New Room>

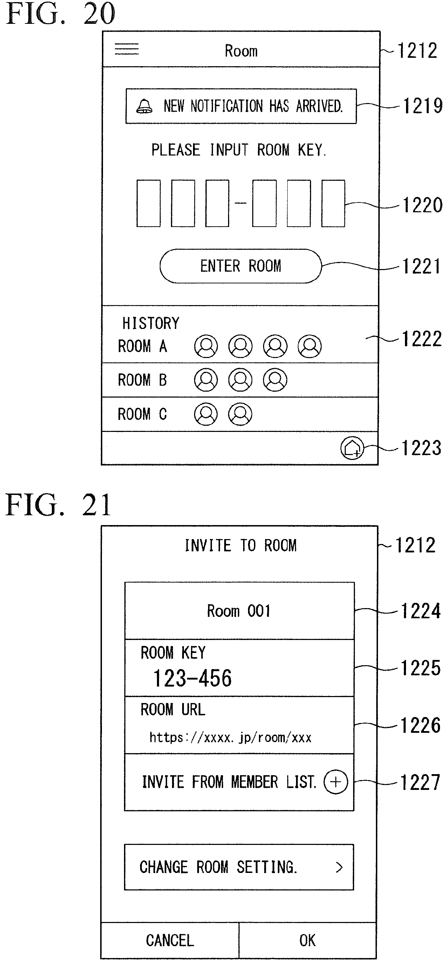

FIG. 20 is a diagram illustrating a room participation screen displayed when a user participates in a room according to Embodiment 4 of the present invention. An invitation notification 1219, a room key input area 1220, a room participation key 1221, a room participation history 1222, and a room creation key 1223 are displayed on the room participation screen illustrated in FIG. 20.

The invitation notification 1219 is displayed as new arrival information when an invitation to a room is arrived from another user. The invitation is a notification for adding a user to a room. A user can participate directly in the inviting room by selecting (tapping) the invitation notification 1219.

The room key input area 1220 is an area in which a room key for identifying a room is input by a user. The room key is a unique key that uniquely determines a call connection destination. A user can participate in a room by inputting a room key in the room key input area 1220 and selecting (tapping) the room participation key 1221.

The room participation history 1222 is a list of rooms in which the user has participated in the past. A user can participate in a room by selecting (tapping) the room displayed in the room participation history 1222.

When a user logs in using a user ID having the right to create a new room, the room creation key 1223 is displayed in a lower part of a room participation screen. When a user selects (taps) the room creation key 1223, a room creation screen (FIG. 21) is displayed on the display 1212.

FIG. 21 is a diagram illustrating a room creation screen displayed when a user creates a room according to Embodiment 4 of the present invention. A room name 1224, a room key 1225, a room URL 1226, and a member invitation key 1227 are displayed on the room creation screen illustrated in FIG. 21.

Although the room name 1224 is determined automatically, the room name 1224 may be changed by a user. The room key 1225 is authentication information necessary for participating in a room created newly and is represented by a number, for example. The room URL 1226 is information for identifying a location of the created room on the Internet. The member invitation key 1227 is a key for displaying a screen for selecting a user to be invited to a room from a member list.

A user who creates a room can invite another user to a room using a room key or a room URL and can select another user that the user wants to invite to a room from a member list. The user who creates a room may inform another user that the user wants to invite to a room of a room key or a room URL via a mail and may inform the user of the room key or the room URL orally. On the other hand, when a user selects another user from a member list, a push notification arrives in the mobile communication terminal 1200 possessed by the selected other user, and the invitation notification 1219 illustrated in FIG. 20 is displayed on the display 1212. An inviting room is displayed in the room participation history 1222 illustrated in FIG. 20. Therefore, a user invited to a room can participate in the room from the room participation history 1222 even when the user overlooks the invitation notification 1219.

### <11. Conversation Function in Room>

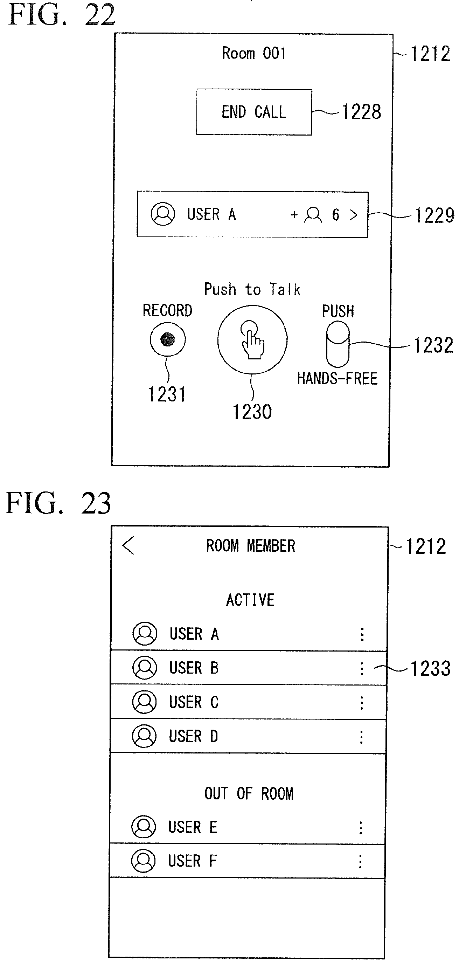

FIG. 22 is a diagram illustrating a call screen displayed when a user participates in a room according to Embodiment 4 of the present invention. A call end key 1228, a room member key 1229, a call key 1230, a record key 1231, a push/hands-free switching key 1232 are displayed on the call screen illustrated in FIG. 22.

When a user taps the call end key 1228, the call in the room ends. The user may end the call by swiping the call end key 1228 rather than tapping the call end key 1228. In this way, the call in the room ends. User names and the number of members (six in the example of FIG. 22) participating in the room are displayed in the room member key 1229. When a user selects (taps) the room member key 1229, a room member screen (FIG. 23) to be described later is displayed on the display 1212.

When a user selects (taps) the call key 1230, the call key 1230 is switched on and off. When the call key 1230 is on, the mobile communication terminal 1200 transmits the voice data acquired from the headset 1100 to the cloud 1300. On the other hand, when the call key 1230 is off, the mobile communication terminal 1200 does not transmit the voice data acquired from the headset 1100 to the cloud 1300. In this way, by switching the call key 1230 to the off state, a call counterpart cannot hear the speech of the user. The switching may be realized using the button 1110 of the headset 1100 instead of the call key 1 230.

When a user selects (taps) the record key 1231, recording of the voice data acquired on the basis of the speech of the user starts. The recorded voice data is stored in the recording data storage 1210 as the recording data. Moreover, the user can switch between push and hands-free modes by swiping the push/hands-free switching key 1232 in an up-down direction.

FIG. 23 is a diagram illustrating a room member screen displayed when a user checks room members according to Embodiment 4 of the present invention. A list of active members participating in a room and a list of members having exited the room are displayed in the room member screen.

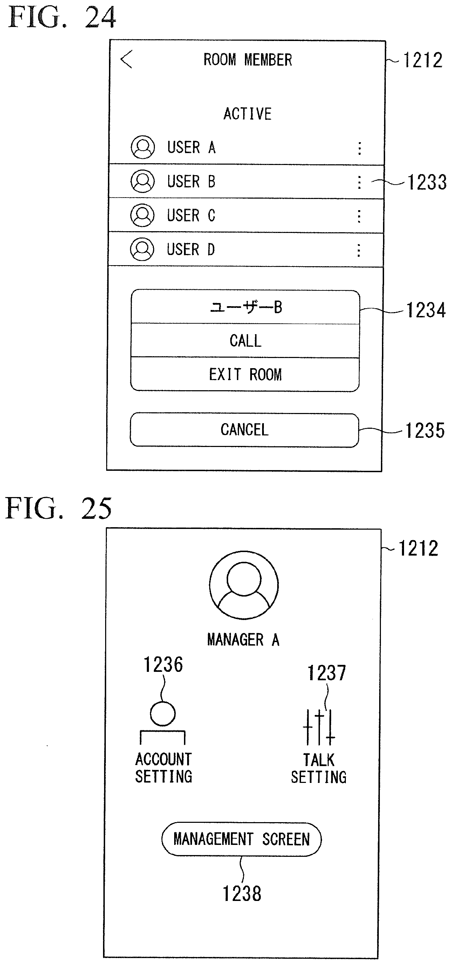

A user having the administrator right can select one of the users displayed on the room member screen to call the selected user and remove the user from the room. For example, when the user having the administrator right selects (taps) a select key 1233 for user B from the room member screen, a popup window 1234 (FIG. 24) is displayed on the display 1212.

FIG. 24 is a diagram illustrating a popup window displayed on the room member screen according to Embodiment 4 of the present invention. The user having the administrator right can select whether the user B will be called or be removed from the room from the popup window 1234. On the other hand, the user having the administrator right can close the popup window 1234 by selecting (tapping) a cancel key 1235.

### <12. User Settings screen>

FIG. 25 is a diagram illustrating the user settings screen according to Embodiment 4 of the present invention. FIG. 25 illustrates a user settings screen of the user (manager A) having the administrator right as an example. An account setting icon 1236, a talk setting icon 1237, and a management screen select key 1238 are displayed on the user settings screen.

When the user having the administrator right selects (taps) the account setting icon 1236, an account settings screen is displayed on the display 1212. The user having the administrator right can change a password and a nickname on the account settings screen.

As described above, a general user and a shared user are also present other than the user having the administrator right. A general user can change a password and a nickname on the account settings screen similarly to the user having the administrator right. On the other hand, a shared user can change a nickname but cannot change a password on the account settings screen. The setting content in the account settings screen is an example only and is not limited thereto. For example, a content other than a password and a nickname may be set on the account settings screen. Moreover, a shared user may change a password on the account settings screen.

When a user selects (taps) the talk setting icon 1237, a talk settings screen is displayed on the display 1212. The user can change a volume and a noise suppression level on the talk settings screen. The setting content in the talk settings screen is an example and is not limited thereto. For example, the user may change settings other than a volume and a noise suppression level on the talk settings screen.

Although the management screen select key 1238 is displayed on the user settings screen of the user having the administrator right, the management screen select key 1238 is not displayed on the user settings screen of a general user and the user settings screen of a shared user. When the user having the administrator right selects (taps) the management screen select key 1238, a management screen is displayed on the display 1212.

### <13. Management Screen>

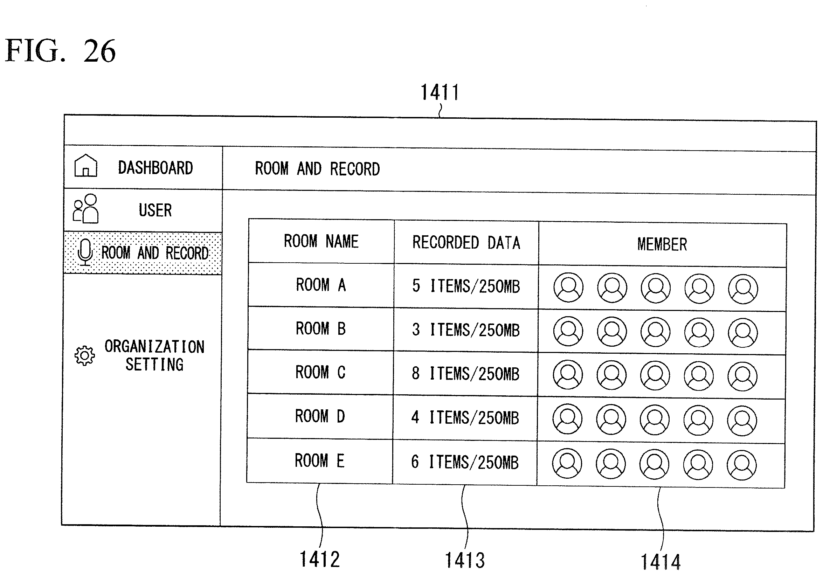

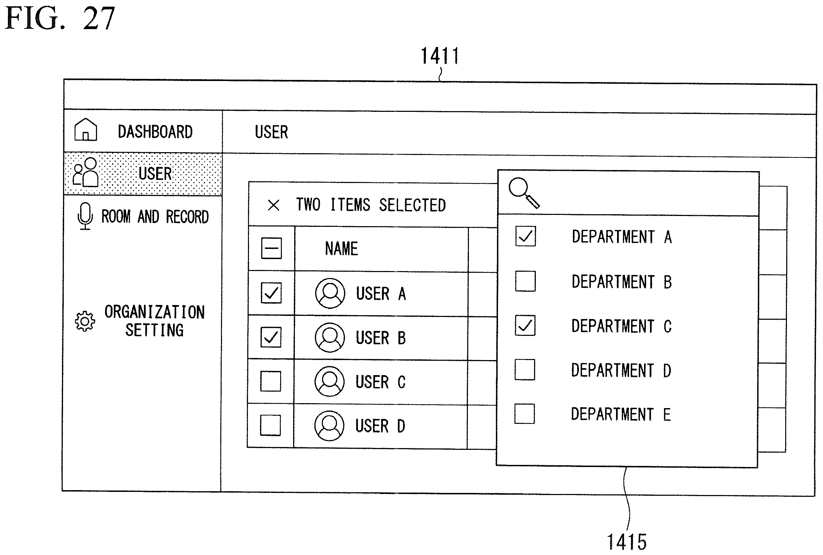

FIG. 26 is a diagram illustrating a management screen related to rooms and recording according to Embodiment 4 of the present invention. FIG. 27 is a diagram illustrating a management screen related to user attributes according to Embodiment 4 of the present invention. Although FIGS. 26 and 27 illustrate the management screen 1411 displayed on the display 1410 connected to the computer 1400 as an example, a management screen similar to that of FIGS. 26 and 27 is also displayed on the display 1212 of the mobile communication terminal 1200. FIGS. 26 and 27 illustrate an example of the management screen 1411 displayed on the display 1410 when a tenant administrator logs in using the computer 400.

As illustrated in FIG. 26, all rooms in a tenant are displayed as a list on the management screen related to rooms and recording. Each room is managed by a room name and a conversation can be recorded in respective rooms. A room name 1412, recording data information 1413, and member information 1414 are displayed in the management screen related to rooms and recording. The room name is the name of a room in which a conversation is recorded. The recording data information 1413 is information indicating the number of pieces of recording data and the volume of recording data. The member information 1414 is information related to members participating in a room.

As illustrated in FIG. 27, all users in the tenant are displayed as a list on the management screen related to user attributes. Users are managed in respective tenants. A tenant administrator can assign various rights to users, change accounts, and invite users from the management screen related to user attributes. As illustrated in FIG. 27, a department select window 1415 is displayed on the management screen related to user attributes. A tenant administrator can set the department (group) of each user by selecting a department in the department select window 1415.

The tenant administrator manages user in respective departments (groups) in an organization. In this way, the tenant administrator can change the attributes of users classified to the same group collectively. Although the tenant administrator manages users in respective groups, there is no limitation thereto. For example, the tenant administrator may assign tags to respective users and manage users in respective tags. The tag is meta information assigned to users and is information used for inviting users and retrieving users.

### <14. Adding Users>

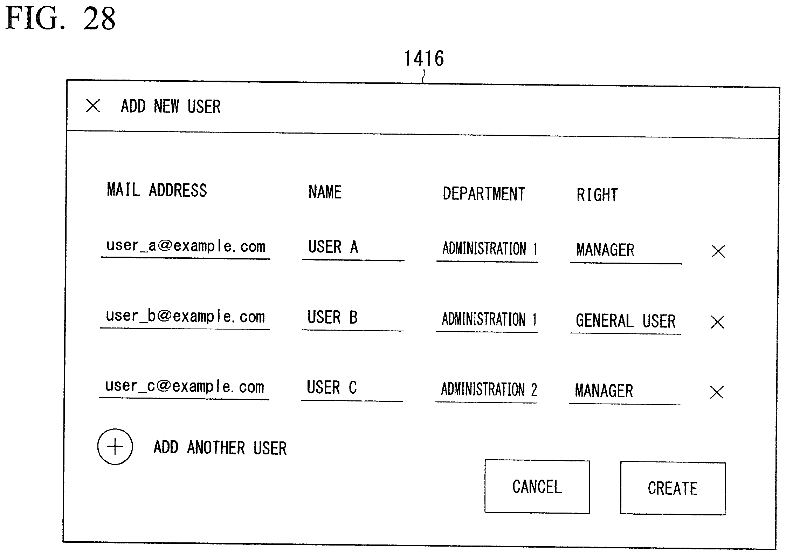

FIG. 28 is a diagram illustrating a user addition screen according to Embodiment 4 of the present invention. A user addition screen 1416 is a screen for adding a general user or a user having the administrator right to a tenant. The tenant administrator can add users to a tenant by inputting a mail address, a name, a department, and a right of a user to the user addition screen 1416 displayed on the display 1410.

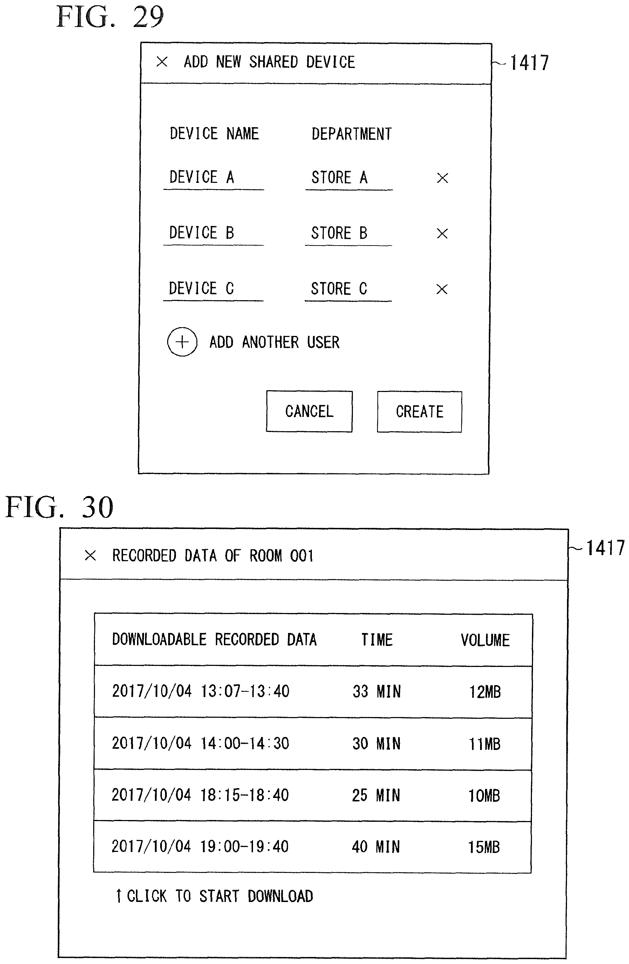

FIG. 29 is a diagram illustrating a shared user addition screen according to Embodiment 4 of the present invention. A shared user addition screen 1417 is a screen for adding a shared user to a tenant. A tenant administrator can add a shared user to a tenant by inputting a device name and a department (store) of a shared device to the shared user addition screen 1417 displayed on the display 1410. The shared device is a mobile communication terminal used by a plurality of temporary shared users. A tenant administrator manages a mobile communication terminal rent to a shared user temporarily as a shared device. Since the tenant administrator cannot specify a shared user using a mail address or the like, the tenant administrator manages the shared device itself used by the shared user.

In many business cloud services, a cost incurs in respective accounts. Therefore, the tenant administrator manages adding and removal of charging target accounts on the management screen collectively. As illustrated in FIG. 28, the tenant administrator inputs a mail address of a new user. The computer 1400 transmits the mail address input by the tenant administrator to the cloud 1300. The cloud 1300 sends an authentication mail for performing regular registration to the mail address received from the computer 1400.

In contrast, in case of part-time users, substitution of members occurs easily. Therefore, it is not appropriate to manage the accounts of part-time users using a mail address. Therefore, the cloud 1300 registers information on a shared device only. A shared device ID for managing shared devices is assigned to a shared device. The shared device ID is identification information of a shared device.

The tenant administrator can perform operations such as automatic logout setting of a shared user, the creation of a shared user, management of tags, user basic information, retransmission of a registration mail, registration of terminals, removal of terminals, displaying of details of user data. Here, registration of terminals means registration for associating a shared user with the mobile communication terminal 1200. Removal of terminals means disassociating a shared user from the mobile communication terminal 1200. The disassociated mobile communication terminal 1200 can be associated with another user account again. The user basic data is data such as a user name (a department name in case of shared users), a nickname, a tag, and an icon.

The tenant administrator can display an audit log, a user activity log, and a list of pieces of recording data associated with users on the display 1212 or the display 1410. The audit log is a log related to operations of the communication system 1000 such as addition, removal, login records of users. The user activity log is a log such as information indicating participation in a room, exit from a room, an invitation to a room, expulsion from a room, recording, and a room state (for example, an inactive state) and information for specifying devices. Moreover, the tenant administrator can perform refined retrieval of voice data using a user ID or time as a retrieval key and display the retrieval result on the display 1212 or the display 1410.

### <15. Recording and Reproduction of Conversation>

FIG. 30 is a diagram illustrating a recording data window that displays a recording data as a list according to Embodiment 4 of the present invention. The recording data window illustrated in FIG. 30 is displayed on the display 1410 when downloading the recording data. The recording data displayed on the recording data window is synthetic voice data generated by the voice data synthesizer 1302 of the cloud 1300. A user can download recording data from the cloud 1300 to the mobile communication terminal 1200 by selecting (tapping) the recording data from the recording data window illustrated in FIG. 30. The reproducer 1213 of the mobile communication terminal 1200 reproduces the downloaded recording data.

Although the mobile communication terminal 1200 starts recording when a user having the administrator right selects (taps) the record key 1231 (FIG. 22), there is no limitation thereto. For example, the mobile communication terminal 1200 may record all conversations by default. Moreover, the mobile communication terminal 1200 may record a conversation by default in a room in which a specific user participates. The user having the administrator right may change the setting of recording when creating a room. For example, the user having the administrator right may determine a recording start condition by taking the characteristics of users into consideration. The recording data (the synthetic voice data generated by the voice data synthesizer 1302) is stored in the voice data storage 1303 of the cloud 1300. Therefore, when the volume of the recording data reaches a predetermined upper limit, the cloud 1300 may notify the computer 1400 or the mobile communication terminal 1500 possessed by the tenant administrator of a condition for changing additional charging and a storage period of other data.

### <16. Voice data Synthesis Process>

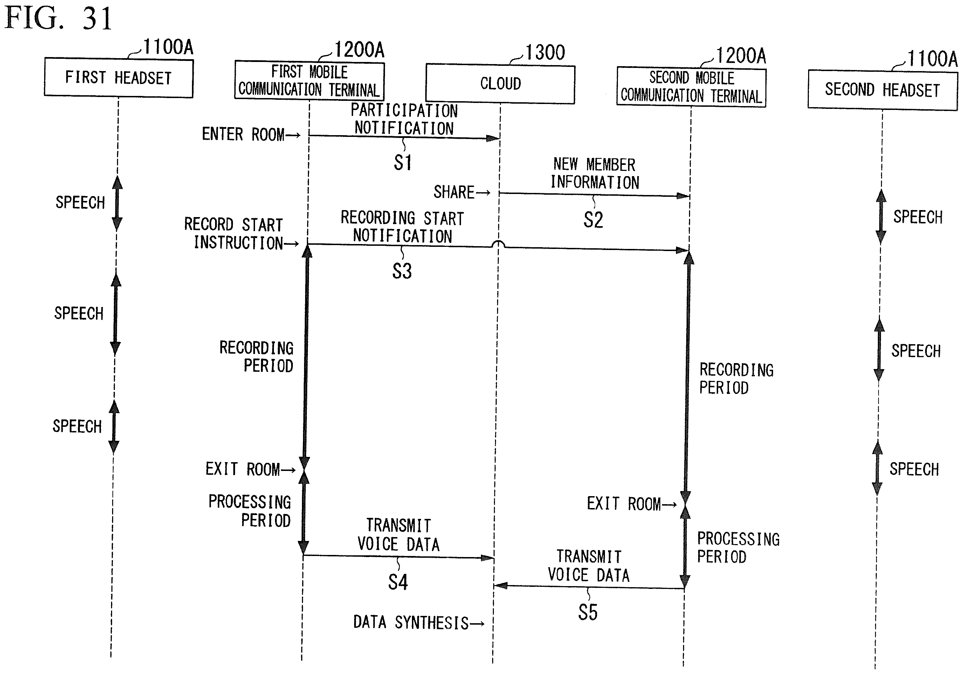

FIG. 31 is a sequence diagram illustrating a voice data synthesis process according to Embodiment 4 of the present invention. In the present embodiment, it is assumed that both user A possessing the first mobile communication terminal 1200A and user B possessing the second mobile communication terminal 1200B have the administrator right and can send an instruction to start recording conversations in a room. For simplification of explanation, although FIG. 31 illustrates an example in which two users are participating in a room, the number of participating users may be three or more. Moreover, although FIG. 31 illustrates an example in which recording starts when the record key 1231 (FIG. 22) is selected (tapped), all conversations may be recorded by default.

In FIG. 31, when the user A possessing the first mobile communication terminal 1200A participates in a room in which the user B possessing the second mobile communication terminal 1200B participates, the first mobile communication terminal 1200A transmits a participation notification to the cloud 1300 (step S1). Upon receiving a participation notification from the first mobile communication terminal 1200A, the cloud 1300 transmits new member information (for example, a user ID) of the user A to the second mobile communication terminal 1200B (step S2). In this way, the user A can converse with the user B in the room.

When the user A selects (taps) the record key 1231 (FIG. 22), the first mobile communication terminal 1200A transmits a record start notification to the second mobile communication terminal 1200B (step S3). In this way, the first mobile communication terminal 1200A and the second mobile communication terminal 1200B start recording voice data.

The first headset 1100A transmits the voice data acquired using a microphone to the first mobile communication terminal 1200A. The voice data generator 1211 of the first mobile communication terminal 1200A generates a plurality of pieces of fragmentary voice data of the parts that the speech characteristics determiner 1205 has determined to be the speech of a person from the voice data received from the first headset 1100A. The fragmentary voice data is voice data of the speech part of the user A. The first mobile communication terminal 1200A transmits the fragmentary voice data to the second headset 1100B via the cloud 1300 and the second mobile communication terminal 1200B. In this way, the speaker of the second headset 1100B can reproduce the voice data of the speech parts of the user A only.

The recording data storage 1210 of the first mobile communication terminal 1200A stores the plurality of pieces of fragmentary voice data generated by the voice data generator 1211 of the first mobile communication terminal 1200A as recording data. The user ID of the user A, the speech start time, and the speech end time are assigned to the fragmentary voice data stored in the recording data storage 1210 of the first mobile communication terminal 1200A as metadata. When the voice data before a record start instruction is issued is stored in the recording data storage 1210 of the first mobile communication terminal 1200A, the voice data may be used as the recording data.

On the other hand, the second headset 1100B transmits the voice data acquired using a microphone to the second mobile communication terminal 1200B. The voice data generator 1211 of the second mobile communication terminal 1200B generates a plurality of pieces of fragmentary voice data of the parts that the speech characteristics determiner 1205 has determined to be the speech of a person from the voice data received from the second headset 1100B. The fragmentary voice data is the voice data of the speech parts of the user B. The second mobile communication terminal 1200B transmits the fragmentary voice data to the first headset 1100A via the cloud 1300 and the first mobile communication terminal 1200A. In this way, the speaker of the first headset 1100A can reproduce the voice data of the speech parts of the user B only.

The recording data storage 1210 of the second mobile communication terminal 1200B stores the plurality of pieces of fragmentary voice data generated by the voice data generator 1211 of the second mobile communication terminal 1200B as recording data. The user ID of the user B, the speech start time, the speech end time are assigned to the fragmentary voice data stored in the recording data storage 1210 of the second mobile communication terminal 1200B as metadata. When the voice data before a record start instruction is issued is stored in the recording data storage 1210 of the second mobile communication terminal 1200B, the voice data may be used as recording data.

Although the first mobile communication terminal 1200A transmits the voice data of the user B from the second mobile communication terminal 1200B to the first headset 1100A via the cloud 1300, the voice data of the user B is not stored in the recording data storage 1210 of the first mobile communication terminal 1200A. Although the second mobile communication terminal 1200B transmits the voice data of the user A received from the first mobile communication terminal 1200A via the cloud 1300 to the second headset 1100B, the voice data of the user A is not stored in the recording data storage 1210 of the second mobile communication terminal 1200B.

The user A exits the room by tapping the call end key 1228 (FIG. 22). When the user A exits the room, the first mobile communication terminal 1200A ends recording the voice data. When a predetermined period is elapsed after the user A exits the room, the first mobile communication terminal 1200A reads the plurality of pieces of fragmentary voice data stored in the recording data storage 1210 and transmits the fragmentary voice data to the cloud 1300 (step S4).

On the other hand, the user B exits the room by tapping the call end key 1228 (FIG. 22). When the user B exits the room, the second mobile communication terminal 1200B ends recording the voice data. When a predetermined period is elapsed after the user B exits the room, the second mobile communication terminal 1200B reads the plurality of pieces of fragmentary voice data stored in the recording data storage 1210 and transmits the fragmentary voice data to the cloud 1300 (step S5).

In the sequence diagram illustrated in FIG. 31, although the mobile communication terminal 1200 buffers the voice data and transmits the voice data to the cloud 1300 when the user exits the room, and the cloud 1300 synthesizes the recording data, there is no limitation thereto. For example, upon receiving a record start notification from the mobile communication terminal 1200, the cloud 1300 may start storing the voice data received from the mobile communication terminal 1200 after that time point. That is, rather than the mobile communication terminal 1200 buffering the voice data, the cloud 1300 may store the voice data always while a conversation is being made. Moreover, the cloud 1300 may generate synthetic voice data using a timestamp (a speech start time and a speech end time) assigned to the voice data when all users exited the room (or stop recording).

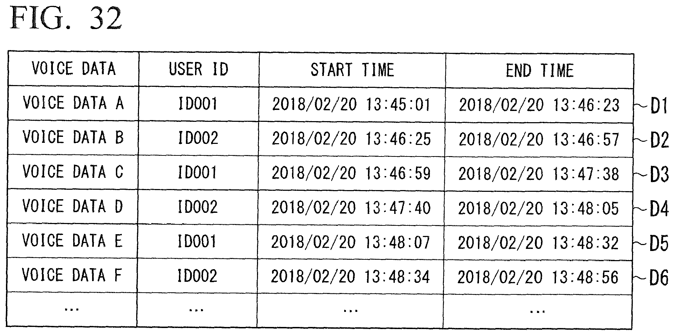

FIG. 32 is a diagram illustrating a plurality of pieces of fragmentary voice data that the cloud receives according to Embodiment 4 of the present invention. In FIG. 32, it is assumed that the user ID of the user A is "ID001" and the user ID of the user B is "ID002". In FIG. 32, voice data A, voice data C, and voice data E are a plurality of pieces of fragmentary voice data (the voice data of the user A) received from the first mobile communication terminal 1200A, and voice data B, voice data D, and voice data F are a plurality of pieces of fragmentary voice data (the voice data of the user B) received from the second mobile communication terminal 1200B.

Metadata D1, metadata D3, and metadata D5 are assigned to the voice data A, the voice data C, and the voice data E, respectively. Moreover, metadata D2, metadata D4, and metadata D6 are assigned to the voice data B, the voice data D, and the voice data F, respectively. The metadata D1 to D6 contains a user ID, a speech start time, and a speech end time. The voice data synthesizer 1302 of the cloud 1300 generates synthetic voice data by synthesizing the plurality of pieces of fragmentary voice data on the basis of the speech start time and the speech end time included in the metadata. The synthetic voice data generated by the voice data synthesizer 1302 is the recording data in which the conversation content in the room is recorded. The voice data storage 1303 stores the synthetic voice data generated by the voice data synthesizer 1302 as recording data for a predetermined period (for example, 6 months).

As described above, the user having the administrator right can download the recording data stored in the voice data storage 1303 of the cloud 1300 by selecting the recording data from the recording data window illustrated in FIG. 30.

According to Embodiment 4 of the present invention, by extracting the voice data of the speech parts of the user, it is possible to decrease the amount of voice data and to reduce the communication amount of data in the communication system 1000. Moreover, the cloud 1300 may generate dictation text by extracting the speech of a specific user only rather than synthesizing all speech contents. In this way, it is possible to extract the speech associated with each user only as original data of conversation data.

When generating the synthetic voice data (conversation file), the voice data synthesizer 1302 of the cloud 1300 may adjust the speech timings of voice data of respective users so that the speeches of respective users do not overlap. In this way, it becomes easy to hear the conversations of respective users. Moreover, the cloud 1300 may use the voice data of each user in speech recognition. Furthermore, the cloud 1300 may retrieve synthetic voice data using the user ID as a retrieval key. In this way, it is possible to efficiently specify users participating in conversations in a room.

In Embodiment 4, the program for executing the respective functions of the mobile communication terminal 1200 is stored in the memory in the mobile communication terminal 1200. The CPU in the mobile communication terminal 1200 can execute the respective functions by reading the program from the memory and executing the program. Moreover, the program for executing the respective functions of the headset 1100 is stored in the memory in the headset 1100. The CPU in the headset 1100 can execute the respective functions by reading the program from the memory and executing the program.

In Embodiment 4, the program for executing the respective functions of the cloud 1300 is stored in the memory in the cloud 1300. The CPU in the cloud 1300 can execute the respective functions by reading the program from the memory and executing the program.

In Embodiment 4, some of the functions of the headset 1100 may be installed in the mobile communication terminal 1200. For example, the mobile communication terminal 1200 may include the speech emphasizer 212 illustrated in FIG. 4 instead of the headset 1100. Moreover, in Embodiment 4, some of the functions of the mobile communication terminal 1200 may be installed in the headset 1100. For example, the headset 1100 may include all or some of the group call manager 1201, the group call controller 1202, the noise estimator 1203, the speech candidate determiner 1204, the speech characteristics determiner 1205, the voice data transmitter 1206, the recording data storage 1210, and the voice data generator 1211 illustrated in FIG. 15 instead of the mobile communication terminal 1200.

In Embodiment 4, some of the functions of the headset 1100 and the mobile communication terminal 1200 may be installed in the cloud 1300. For example, the cloud 1300 may include the speech emphasizer 212 illustrated in FIG. 4 instead of the headset 1100. Moreover, the cloud 1300 may include all or some of the group call manager 1201, the group call controller 1202, the noise estimator 1203, the speech candidate determiner 1204, the speech characteristics determiner 1205, the voice data transmitter 1206, the recording data storage 1210, and the voice data generator 1211 illustrated in FIG. 15 instead of the mobile communication terminal 1200.

As described above, according to Embodiment 4 of the present invention, it is possible to realize a service providing method including a first acquisition step of acquiring first fragmentary voice data from the first mobile communication terminal 1200A, a second acquisition step of acquiring second fragmentary voice data from the second mobile communication terminal 1200B belonging to the same call group as the first mobile communication terminal 1200A, a generation step of synthesizing the first voice data and the second voice data to generate synthetic voice data, and a providing step of providing the synthetic voice data in a reproducible manner.

According to Embodiment 4 of the present invention, it is possible to realize the cloud 1300 that executes the service providing method.

According to Embodiment 4 of the present invention, it is possible to realize a program that executes the service providing method by being executed by an information processing apparatus.

According to Embodiment 4 of the present invention, it is possible to realize a recording medium having the program recorded thereon.

According to Embodiment 4 of the present invention, it is possible to provide the mobile communication terminal 1200 that can connect to the cloud 1300 and includes the communicator 1208 that receives synthetic voice data obtained by synthesizing a plurality of pieces of fragmentary voice data from the cloud 1300 and the reproducer 1213 that reproduces the synthetic voice data received by the communicator 1208.

### [Reference Signs List]

- 1: Server
- 2: Client
- 10: API server
- 11: VoIP server
- 20: Mobile communication terminal
- 21: Headset
- 100: Call establishment controller
- 110: Call quality controller
- 120: Client manager
- 130: Server manager
- 140: Call group manager
- 201: Group call manager
- 202: Group call controller
- 203: Noise estimator
- 204: Speech candidate determiner
- 205: Speech characteristics determiner
- 206: Voice data transmitter
- 207: Reproduction voice data transmitter
- 208: Communicator
- 209: Short range wireless communicator
- 211: Speech detector
- 212: Speech emphasizer
- 213: Reproduction controller
- 216: Short range wireless communicator
- 300: Communication system
- 1000: Communication system
- 1100A: First headset
- 1100B: Second headset
- 1200A: First mobile communication terminal
- 1200B: Second mobile communication terminal
- 1201: Group call manager
- 1202: Group call controller
- 1203: Noise estimator
- 1204: Speech candidate determiner
- 1205: Speech characteristics determiner
- 1206: Voice data transmitter
- 1207: Reproduction voice data transmitter
- 1208: Communicator
- 1209: Short range wireless communicator
- 1210: Recording data storage
- 1211: Voice data generator
- 1212: Display
- 1300: Cloud
- 1301: Communicator
- 1302: Voice data synthesizer
- 1303: Voice data storage
- 1400: Computer
- 1410: Display
- 1500: Mobile communication terminal

## Claims

1. A communication system in which a group call is performed between a plurality of clients (2) via a VoIP server (10), the communication system comprising:
an API server (1) configured to manage the group call,
wherein each client (2) in the plurality of clients comprises:
a mobile communication terminal (20) configured to perform communication via a mobile communication network; and
a headset (21) configured to exchange voice data with the mobile communication terminal (20) by short range wireless communication,
wherein the headset (21) comprises:
a speech detector (211) configured to detect a speech;
a speech emphasizer (212) configured to emphasize a speech part included in the speech detected by the speech detector (211) relatively with respect to ambient sound; and
a reproduction controller (213) configured to reproduce the voice data received from the mobile communication terminal (20) so that the speech detected by the speech detector (211) in the speech part of the voice data is easy to be heard relatively with respect to background noise,
wherein the mobile communication terminal (20) comprises:
a noise estimator (1203) configured to estimate noise included in the voice data received from the headset (21) ;
a speech candidate determiner (1204) configured to determine a range of candidates for the speech part from the voice data on the basis of an estimation result obtained by the noise estimator (1203);
a speech characteristics determiner (1205) configured to determine a speech part of a person from the range of candidates for the speech part of the voice data determined by the speech candidate determiner (1204);
a voice data transmitter (1206) configured to transmit the part of the voice data that the speech characteristics determiner (1205) has determined to be the speech of a person to the VoIP server (11); and
a reproduction voice data transmitter (1207) configured to transmit the voice data received from the VoIP server (11) to the headset (21),
wherein the API server (10) comprises:
a communication quality controller (110) configured to notify the clients (2) and the VoIP server (11) of a command related to control of a communication quality of the group call on the basis of a communication state between each of the clients (2) and the VoIP server (11), and
wherein the voice data transmitter (206) is configured to encode the part of the voice data that the speech characteristics determiner (205) has determined to be the speech of a person with a communication quality based on the command notified from the communication quality controller (110) and to transmit the encoded part to the VoIP server (11) .

2. A mobile communication terminal (1500) used in a communication system comprising an API server (1) that manages a group call, in which the group call is performed between a plurality of clients (2) via a VoIP server (11),
wherein the mobile communication terminal (1500) comprises:
a noise estimator (1203) configured to estimate noise contained in voice data received from a headset (21) connected to the mobile communication terminal (1500);
a speech candidate determiner (1204) configured to determine a range of candidates for a speech part from the voice data on the basis of an estimation result obtained by the noise estimator (1203);
a speech characteristics determiner (1205) configured to determine a speech part of a person from the range of candidates for the speech part of the voice data determined by the speech candidate determiner (1204);
a voice data transmitter (1206) configured to transmit the part of the voice data that the speech characteristics determiner (1205) has determined to be the speech of a person to the VoIP server (11); and
a reproduction voice data transmitter (1207) configured to transmit the voice data received from the VoIP server (11) to the headset (21),
wherein, when a command related to control of a communication quality of the group call on the basis of a communication state between each of the clients (2) and the VoIP server (11) is notified from the API server (1), the voice data transmitter (1206) is configured to encode the part of the voice data that the speech characteristics determiner (1205) has determined to be the speech of a person with a communication quality based on the command related to control of a communication quality and to transmit the encoded part to the VoIP server (11).

## Patentansprüche

1. Ein Kommunikationssystem, in dem ein Gruppenanruf zwischen einer Vielzahl von Clients (2) über einen VoIP-Server (10) durchgeführt wird, wobei das Kommunikationssystem aufweist:
einen API-Server (1), der konfiguriert ist, um den Gruppenanruf zu verwalten,
wobei jeder Client (2) in der Vielzahl von Clients aufweist:
ein mobiles Kommunikationsendgerät (20), das konfiguriert ist, um eine Kommunikation über ein mobiles Kommunikationsnetz durchzuführen; und
ein Headset (21), das konfiguriert ist, um Sprachdaten mit dem mobilen Kommunikationsendgerät (20) durch drahtlose Kurzstrecken-Kommunikation auszutauschen,
wobei das Headset (21) aufweist:
einen Sprachdetektor (211), der konfiguriert ist, um eine Sprache zu erfassen;
einen Sprachbetonter (212), der konfiguriert ist, um einen Sprachteil, der in der von dem Sprachdetektor (211) erfassten Sprache enthalten ist, relativ zu Umgebungsgeräuschen zu betonen; und
eine Wiedergabesteuerung (213), die konfiguriert ist, um die von dem mobilen Kommunikationsendgerät (20) empfangenen Sprachdaten so wiederzugeben, dass die von dem Sprachdetektor (211) in dem Sprachteil der Sprachdaten erfasste Sprache relativ zu Hintergrundgeräuschen leicht zu hören ist,
wobei das mobile Kommunikationsendgerät (20) aufweist:
einen Rauschschätzer (1203), der konfiguriert ist, um das in den von dem Headset (21) empfangenen Sprachdaten enthaltene Rauschen zu schätzen;
einen Sprachkandidaten-Bestimmer (1204), der konfiguriert ist, um einen Bereich von Kandidaten für den Sprachteil aus den Sprachdaten auf der Basis eines durch den Rauschschätzer (1203) erhaltenen Schätzergebnisses zu bestimmen;
einen Spracheigenschafts-Bestimmer (1205), der konfiguriert ist, um einen Sprachteil einer Person aus dem Bereich von Kandidaten für den Sprachteil der Sprachdaten zu bestimmen, der von dem Sprachkandidaten-Bestimmer (1204) bestimmt wurde;
einen Sprachdatentransmitter (1206), der konfiguriert ist, um den Teil der Sprachdaten, den der Spracheigenschafts-Bestimmer (1205) als die Sprache einer Person bestimmt hat, an den VoIP-Server (11) zu übertragen; und
einen Wiedergabesprachdatentransmitter (1207), der konfiguriert ist, um die von dem VoIP-Server (11) empfangenen Sprachdaten an das Headset (21) zu übertragen,
wobei der API-Server (10) aufweist:
eine Kommunikationsqualitätssteuerung (110), die konfiguriert ist, um die Clients (2) und den VoIP-Server (11) über einen Befehl zu informieren, der sich auf eine Steuerung einer Kommunikationsqualität des Gruppenanrufs auf der Basis eines Kommunikationszustands zwischen jedem der Clients (2) und dem VoIP-Server (11) bezieht, und
wobei der Sprachdatentransmitter (206) konfiguriert ist, um den Teil der Sprachdaten zu kodieren, den der Spracheigenschafts-Bestimmer (205) basierend auf dem von der Kommunikationsqualitätssteuerung (110) mitgeteilten Befehl als die Sprache einer Person mit einer Kommunikationsqualität bestimmt hat, und um den kodierten Teil an den VoIP-Server (11) zu übertragen.

2. Ein mobiles Kommunikationsendgerät (1500), das in einem Kommunikationssystem verwendet wird, das einen API-Server (1) aufweist, der einen Gruppenanruf verwaltet, in dem der Gruppenanruf zwischen einer Vielzahl von Clients (2) über einen VoIP-Server (11) durchgeführt wird,
wobei das mobile Kommunikationsendgerät (1500) aufweist:
einen Rauschschätzer (1203), der konfiguriert ist, um Rauschen zu schätzen, das in Sprachdaten enthalten ist, die von einem mit dem mobilen Kommunikationsendgerät (1500) verbundenen Headset (21) empfangen werden;
einen Sprachkandidaten-Bestimmer (1204), der konfiguriert ist, um einen Bereich von Kandidaten für einen Sprachteil aus den Sprachdaten auf der Basis eines durch den Rauschschätzer (1203) erhaltenen Schätzergebnisses zu bestimmen;
einen Spracheigenschafts-Bestimmer (1205), der konfiguriert ist, um einen Sprachteil einer Person aus dem Bereich von Kandidaten für den Sprachteil der Sprachdaten zu bestimmen, der von dem Sprachkandidaten-Bestimmer (1204) bestimmt wurde;
einen Sprachdatentransmitter (1206), der konfiguriert ist, um den Teil der Sprachdaten, den der Spracheigenschafts-Bestimmer (1205) als die Sprache einer Person bestimmt hat, an den VoIP-Server (11) zu übertragen; und
einen Wiedergabesprachdatentransmitter (1207), der konfiguriert ist, um die von dem VoIP-Server (11) empfangenen Sprachdaten an das Headset (21) zu übertragen,
wobei, wenn ein Befehl, der sich auf eine Steuerung einer Kommunikationsqualität des Gruppenanrufs auf der Basis eines Kommunikationszustands zwischen jedem der Clients (2) und dem VoIP-Server (11) bezieht, von dem API-Server (1) mitgeteilt wird, der Sprachdatentransmitter (1206) konfiguriert ist, um den Teil der Sprachdaten zu kodieren, den der Spracheigenschafts-Bestimmer (1205) basierend auf dem Befehl, der sich auf eine Steuerung einer Kommunikationsqualität bezieht, als die Sprache einer Person mit einer Kommunikationsqualität bestimmt hat, und um den kodierten Teil an den VoIP-Server (11) zu übertragen.

## Revendications

1. Système de communication dans lequel un appel de groupe est réalisé entre une pluralité de clients (2) via un serveur VoIP (10), le système de communication comprenant :
un serveur API (1) configuré pour gérer l'appel de groupe,
dans lequel chaque client (2) parmi la pluralité de clients comprend :
un terminal de communication mobile (20) configuré pour réaliser une communication via un réseau de communication mobile ; et
un casque (21) configuré pour échanger des données vocales avec le terminal de communication mobile (20) par une communication sans fil de courte portée,
dans lequel le casque (21) comprend :
un détecteur de parole (211) configuré pour détecter une parole ;
un accentueur de parole (212) configuré pour accentuer une partie de parole contenue dans la parole détectée par le détecteur de parole (211) relativement par rapport à un son ambiant ; et
un dispositif de commande de reproduction (213) configuré pour reproduire les données vocales reçues depuis le terminal de communication mobile (20) de sorte que la parole détectée par le détecteur de parole (211) dans la partie de parole des données vocales soit facile à entendre relativement par rapport à un bruit de fond,
dans lequel le terminal de communication mobile (20) comprend :
un estimateur de bruit (1203) configuré pour estimer un bruit contenu dans les données vocales reçues depuis le casque (21) ;
un déterminateur de candidat de parole (1204) configuré pour déterminer une plage de candidats pour la partie de parole à partir des données vocales sur la base d'un résultat d'estimation obtenu par l'estimateur de bruit (1203) ;
un déterminateur de caractéristiques de parole (1205) configuré pour déterminer une partie de parole d'une personne à partir de la plage de candidats pour la partie de parole des données vocales déterminée par le déterminateur de candidat de parole (1204) ;
un émetteur de données vocales (1206) configuré pour émettre la partie des données vocales que le déterminateur de caractéristiques de parole (1205) a déterminé comme étant la parole d'une personne au serveur VoIP (11) ; et
un émetteur de données vocales de reproduction (1207) configuré pour émettre les données vocales reçues depuis le serveur VoIP (11) au casque (21),
dans lequel le serveur API (10) comprend :
un dispositif de commande de qualité de communication (110) configuré pour notifier les clients (2) et le serveur VoIP (11) d'une instruction liée à une commande d'une qualité de communication de l'appel de groupe sur la base d'un état de communication entre chacun des clients (2) et le serveur VoIP (11), et
dans lequel l'émetteur de données vocales (206) est configuré pour coder la partie des données vocales que le déterminateur de caractéristiques de parole (205) a déterminé comme étant la parole d'une personne avec une qualité de communication sur la base de l'instruction notifiée depuis le dispositif de commande de qualité de communication (110) et pour émettre la partie codée au serveur VoIP (11).

2. Terminal de communication mobile (1500) utilisé dans un système de communication comprenant un serveur API (1) qui gère un appel de groupe, dans lequel l'appel de groupe est réalisé entre une pluralité de clients (2) via un serveur VoIP (11),
dans lequel le terminal de communication mobile (1500) comprend :
un estimateur de bruit (1203) configuré pour estimer un bruit contenu dans des données vocales reçues depuis un casque (21) relié au terminal de communication mobile (1500) ;
un déterminateur de candidat de parole (1204) configuré pour déterminer une plage de candidats pour une partie de parole à partir des données vocales sur la base d'un résultat d'estimation obtenu par l'estimateur de bruit (1203) ;
un déterminateur de caractéristiques de parole (1205) configuré pour déterminer une partie de parole d'une personne à partir de la plage de candidats pour la partie de parole des données vocales déterminée par le déterminateur de candidat de parole (1204) ;
un émetteur de données vocales (1206) configuré pour émettre la partie des données vocales que le déterminateur de caractéristiques de parole (1205) a déterminé comme étant la parole d'une personne au serveur VoIP (11) ; et
un émetteur de données vocales de reproduction (1207) configuré pour émettre les données vocales reçues depuis le serveur VoIP (11) au casque (21),
dans lequel, lorsqu'une instruction liée à une commande d'une qualité de communication de l'appel de groupe sur la base d'un état de communication entre chacun des clients (2) et le serveur VoIP (11) est notifiée depuis le serveur API (1), l'émetteur de données vocales (1206) est configuré pour coder la partie des données vocales que le déterminateur de caractéristiques de parole (1205) a déterminé comme étant la parole d'une personne avec une qualité de communication sur la base de l'instruction liée à une commande d'une qualité de communication et pour émettre la partie codée au serveur VoIP (11).
